(19) **Europäisches Patentamt European Patent Office Office européen des brevets**

(11) **EP 3 667 780 A1**

(12) **EUROPEAN PATENT APPLICATION**
published in accordance with Art. 153(4) EPC

(43) Date of publication:
**17.06.2020 Bulletin 2020/25**

(51) Int Cl.:
***H01M 4/36*** (2006.01)

(21) Application number: **19770882.9**

(22) Date of filing: **07.01.2019**

(86) International application number:
**PCT/CN2019/070656**

(87) International publication number:
**WO 2019/179219 (26.09.2019 Gazette 2019/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.03.2018 CN 201810249188**
**21.03.2018 CN 201810232673**
**21.03.2018 CN 201810232788**
**21.03.2018 CN 201810232809**
**21.03.2018 CN 201810232779**
**21.03.2018 CN 201810232802**
**21.03.2018 CN 201810232778**
**21.03.2018 CN 201810232791**
**21.03.2018 CN 201810232777**
**21.03.2018 CN 201810232801**
**21.03.2018 CN 201810232790**

(71) Applicants:
• **Lionano (Zhejiang) Inc.**
**Huzhou, Zhejiang 313100 (CN)**
• **Lionano (Suzhou) Inc.**
**Changshu, Jiangsu 215513 (CN)**

(72) Inventors:
• **REN, Dong**
**Changshu, Jiangsu 215513 (CN)**
• **FANG, Yan**
**Changshu, Jiangsu 215513 (CN)**
• **SHEN, Yun**
**Huzhou, Zhejiang 313100 (CN)**

(74) Representative: **Becker, Eberhard**
**Becker & Kurig Partnerschaft**
**Patentanwälte PartmbB**
**Bavariastrasse 7**
**80336 München (DE)**

(54) **NICKEL-COBALT-ALUMINUM TERNARY LITHIUM ION BATTERY ANODE MATERIAL, PREPARATION METHOD THEREFOR AND APPLICATION THEREOF, AND LITHIUM ION BATTERY**

(57) The present disclosure provides a nickel-cobalt-aluminium ternary lithium ion battery cathode material, a preparation method and application thereof. The chemical formula of the material is $(Li_aNi_{1-x-y}Co_xAl_y)_{1-b}M_bO_2$, where $x>0$, $y>0$, $1-x-y>0$, $1 \leq a \leq 1.1$, and $0 < b \leq 0.02$. The preparation method of the material includes the steps of first sintering a ternary cathode material precursor $Ni_{1-x-y}Co_xAl_y(OH)_{2+y}$; then adding a lithium source to the sintering product for sintering; and finally adding a coating material for sintering to obtain a target product. The nickel-cobalt-aluminium ternary lithium ion battery cathode material synthesized by the preparation method has excellent cycle performance. The preparation method is simple, controllable, and easy for industrial mass production.

EP 3 667 780 A1

**(Cont. next page)**

FIG. 1

**Description**

BACKGROUND OF THE DISCLOSURE

1. Field of the Disclosure

The present disclosure relates to the field of electrode materials, in particular, to a nickel-cobalt-aluminium ternary lithium ion battery cathode material, a preparation method and application thereof.

2. Description of Related Art

The nickel-cobalt-aluminium ternary cathode material has the characteristics of high energy density, good low-temperature performance, good thermal stability, low cost, low toxicity to the environment and the like, and is one of the most promising cathode materials in the field of power lithium ion batteries. However, because the nickel-cobalt-aluminium ternary material has a strong side reaction with an organic electrolyte within a wide voltage range, the impedance of the battery during charging and discharging is increased, and the cycle stability of the material is lowered. Therefore, how to improve the cycle stability of the nickel-cobalt-aluminium ternary material has become one of the problems to be solved urgently in the industry.

SUMMARY OF THE DISCLOSURE

The present disclosure aims to provide a coated nickel-cobalt-aluminium ternary lithium ion battery cathode material excellent in cycle performance and a preparation method thereof, a lithium ion battery using the cathode material and application of the cathode material.

In order to solve the above technical problems, the technical solution of the present disclosure is that a coated nickel-cobalt-aluminium ternary lithium ion battery cathode material includes a lithium nickel cobalt aluminate material and a coating material which coats the surface of the lithium nickel cobalt aluminate material, wherein the chemical formula of the coated nickel-cobalt-aluminium ternary lithium ion battery cathode material is shown in formula (I):

$$(Li_aN_{11-x-y}Co_xAl_y)_{1-b}M_bO_2 \qquad (I)$$

a, b, x, and y are mole fractions, $x>0$, $y>0$, $1-x-y>0$, $1\leq a\leq 1.1$, and $0<b\leq 0.02$;
M is selected from one or more of an alkali metal element, an alkaline earth metal element, an element from group XIII, an element from group XIV, a transition metal element, and a rare earth element.

Preferably, $0.03\leq x\leq 0.15$, $0.01\leq y\leq 0.05$, $1\leq a\leq 1.05$, and $0<b\leq 0.01$.
Preferably, M is Zr, $x=0.15$, $y=0.035$, $a=1.035$, and $b=0.0016$.
Preferably, M is Zr, $x=0.15$, $y=0.035$, $a=1.035$, and $b=0.0008$.
Preferably, M is Al, $x=0.15$, $y=0.035$, $a=1.035$, and $b=0.002$.
Preferably, M is Al, $x=0.15$, $y=0.035$, $a=1.035$, and $b=0.0055$.
Preferably, M is Zn, $x=0.15$, $y=0.035$, $a=1.035$, and $b=0.0029$.
Preferably, M is Zn, $x=0.15$, $y=0.035$, $a=1.035$, and $b=0.0007$.
Preferably, M is Mg, $x=0.15$, $y=0.035$, $a=1.035$, and $b=0.0078$.
Preferably, M is Mg, $x=0.15$, $y=0.035$, $a=1.035$, and $b=0.0017$.
Preferably, the coating method is one of a dry method, an aqueous phase wet method, or an organic phase wet method.
In order to solve the above technical problems, the present disclosure further provides a preparation method of the coated nickel-cobalt-aluminium ternary lithium ion battery cathode material, including the following steps:

step (1), first sintering: sintering a ternary cathode material precursor $Ni_{1-x-y}Co_xAl_y(OH)_{2+y}$;
step (2), second sintering: adding a lithium source to the product obtained by sintering in step (1) for mixing and grinding, sintering after uniform grinding, and then cooling to room temperature after complete sintering; and
step (3), third sintering: adding a coating material to the product obtained by sintering in step (2) for sintering to obtain a coated nickel-cobalt-aluminium ternary lithium ion battery cathode material $(Li_aNi_{1-x-y}Co_xAl_y)_{1-b}M_bO_2$, wherein $0.03\leq x\leq 0.15$, $0.01\leq y\leq 0.05$, $1\leq a\leq 1.1$, and $0<b\leq 0.02$.

Preferably, in step (1), the sintering time is 6 to 20 hours, and the sintering temperature is 200 to 1000 °C.

Preferably, in step (2), the lithium source is one of lithium hydroxide, lithium acetate, lithium oxalate, lithium carbonate, lithium nitrate, lithium chloride and lithium fluoride.

Preferably, in step (2), the lithium source is lithium hydroxide monohydrate, and the lithium hydroxide monohydrate is dried to completely lose crystal water and then mixed with the product obtained by sintering in step (1).

Preferably, in step (2), the sintering time is 8 to 24 hours, and the sintering temperature is 500 to 1000 °C.

Preferably, in step (2), the cooling rate is 0.01 to 2.5 °C/min.

Preferably, in step (2), the cooling rate is 0.02 to 1 °C/min.

Preferably, in step (2), the lithium source is added in a molar ratio of Li to (Ni+Co+Al) in the ternary cathode material precursor of 1 : 1 to 1.1 : 1.

Preferably, the sintering in step (2) is carried out in air or oxygen.

Preferably, the coating material in step (3) is selected from one of of an oxide of metal M, a fluoride of metal M, and a sulfide of metal M.

Preferably, in step (3), the sintering time is 1 to 12 hours, and the sintering temperature is 500 to 1000 °C.

The present disclosure aims to provide a $ZrO_2$-coated nickel-cobalt-aluminium ternary lithium ion battery cathode material excellent in cycle performance and a preparation method thereof, and a lithium ion battery using the cathode material.

In order to solve the above technical problems, the technical solution of the present disclosure is that a $ZrO_2$-coated nickel-cobalt-aluminium ternary lithium ion battery cathode material includes a lithium nickel cobalt aluminate material and $ZrO_2$ which coats the surface of the lithium nickel cobalt aluminate material, wherein the chemical formula of the $ZrO_2$-coated nickel-cobalt-aluminium ternary lithium ion battery cathode material is shown in formula (I):

$$(Li_aNi_{1-x-y}Co_xAl_y)_{1-b}Zr_bO_2 \qquad (I)$$

a, b, x, and y are mole fractions, x>0, y>0, 1-x-y>O, 1≤a≤1.1, and 0<b≤0.02.

Preferably, 0.03≤x≤0.15, 0.01≤y≤0.05, 1≤a≤1.05, and 0<b≤0.01.

Preferably, x=0.15, y=0.035, a=1.035, and b=0.0016.

Preferably, x=0.15, y=0.035, a=1.035, and b=0.0008.

In order to solve the above technical problems, the present disclosure further provides a preparation method of the coated nickel-cobalt-aluminium ternary lithium ion battery cathode material, including the following steps:

step (1), first sintering: sintering a ternary cathode material precursor $Ni_{1-x-y}Co_xAl_y(OH)_{2+y}$ at a temperature of 200 to 1000 °C for 6 to 20 hours;

step (2), second sintering: adding a lithium source to the product obtained by sintering in step (1) for mixing and grinding uniformly, then sintering in air or oxygen at a temperature of 500 to 1000 °C for 8 to 24 hours, and cooling to room temperature at a rate of 0.01 to 2.5 °C/min after complete sintering; and

step (3), third sintering: adding a coating material $ZrO_2$ to the product obtained by sintering in step (2), and sintering at a temperature of 500 to 1000 °C for 1 to 12 hours to obtain a coated nickel-cobalt-aluminium ternary lithium ion battery cathode material $(Li_aNi_{1-x-y}Co_xAl_y)_{1-b}Zr_bO_2$, wherein 0.03≤x≤0.15, 0.01≤y≤0.05, 1≤a≤1.1, and 0<b≤0.02.

The present disclosure aims to provide an $Al_2O_3$-coated nickel-cobalt-aluminium ternary lithium ion battery cathode material excellent in cycle performance and a preparation method thereof, a lithium ion battery using the cathode material and application of the cathode material.

In order to solve the above technical problems, the technical solution of the present disclosure is that an $Al_2O_3$-coated nickel-cobalt-aluminium ternary lithium ion battery cathode material includes a lithium nickel cobalt aluminate material and $Al_2O_3$ which coats the surface of the lithium nickel cobalt aluminate material, wherein the chemical formula of the $Al_2O_3$-coated nickel-cobalt-aluminium ternary lithium ion battery cathode material is shown in formula (I):

$$(Li_aNi_{1-x-y}Co_xAl_y)_{1-b}Al_bO_2 \qquad (I)$$

a, b, x, and y are mole fractions, x>0, y>0, 1-x-y>0, 1≤a≤1.1, and 0<b≤0.02.

Preferably, 0.03≤x≤0.15, 0.01≤y≤0.05, 1≤a≤1.05, and 0<b≤0.01.

Preferably, x=0.15, y=0.035, a=1.035, and b=0.002.

Preferably, x=0.15, y=0.035, a=1.035, and b=0.0055.

In order to solve the above technical problems, the present disclosure further provides a preparation method of the $Al_2O_3$-coated nickel-cobalt-aluminium ternary lithium ion battery cathode material, including the following steps:

step (1), first sintering: sintering a ternary cathode material precursor $Ni_{1-x-y}Co_xAl_y(OH)_{2+y}$ at a temperature of 200 to 1000 °C for 6 to 20 hours;

step (2), second sintering: adding a lithium source to the product obtained by sintering in step (1) for mixing and grinding uniformly, then sintering in air or oxygen at a temperature of 500 to 1000 °C for 8 to 24 hours, and cooling to room temperature at a rate of 0.01 to 2.5 °C/min after complete sintering; and

step (3), third sintering: adding a coating material $Al_2O_3$ to the product obtained by sintering in step (2), and sintering at a temperature of 500 to 1000 °C for 1 to 12 hours to obtain an $Al_2O_3$-coated nickel-cobalt-aluminium ternary lithium ion battery cathode material $(Li_aNi_{1-x-y}Co_xAl_y)_{1-b}Al_bO_2$, wherein $0.03{\leq}x{\leq}0.15$, $0.01{\leq}y{\leq}0.05$, $1{\leq}a{\leq}1.1$, and $0<b{\leq}0.02$.

The present disclosure aims to provide a ZnO-coated nickel-cobalt-aluminium ternary lithium ion battery cathode material excellent in cycle performance and a preparation method thereof, a lithium ion battery using the cathode material and application of the cathode material.

In order to solve the above technical problems, the technical solution of the present disclosure is that a ZnO-coated nickel-cobalt-aluminium ternary lithium ion battery cathode material includes a lithium nickel cobalt aluminate material and ZnO which coats the surface of the lithium nickel cobalt aluminate material, wherein the chemical formula of the ZnO-coated nickel-cobalt-aluminium ternary lithium ion battery cathode material is shown in formula (I):

$$(Li_aNi_{1-x-y}Co_xZn_y)_{1-b}Zn_bO_2 \qquad (I)$$

a, b, x, and y are mole fractions, $x>0$, $y>0$, $1-x-y>0$, $1{\leq}a{\leq}1.1$, and $0<b{\leq}0.02$.

Preferably, $0.03{\leq}x{\leq}0.15$, $0.01{\leq}y{\leq}0.05$, $1{\leq}a{\leq}1.05$, and $0<b{\leq}0.01$.

Preferably, $x=0.15$, $y=0.035$, $a=1.035$, and $b=0.0029$.

Preferably, $x=0.15$, $y=0.035$, $a=1.035$, and $b=0.0007$.

In order to solve the above technical problems, the present disclosure further provides a preparation method of the ZnO-coated nickel-cobalt-aluminium ternary lithium ion battery cathode material, including the following steps:

step (1), first sintering: sintering a ternary cathode material precursor $Ni_{1-x-y}Co_xZn_y(OH)_{2+y}$ at a temperature of 200 to 1000 °C for 6 to 20 hours;

step (2), second sintering: adding a lithium source to the product obtained by sintering in step (1) for mixing and grinding uniformly, then sintering in air or oxygen at a temperature of 500 to 1000 °C for 8 to 24 hours, and cooling to room temperature at a rate of 0.01 to 2.5 °C/min after complete sintering; and

step (3), third sintering: adding a coating material ZnO to the product obtained by sintering in step (2), and sintering at a temperature of 500 to 1000 °C for 1 to 12 hours to obtain a ZnO-coated nickel-cobalt-aluminium ternary lithium ion battery cathode material $(Li_aNi_{1-x-y}Co_xZn_y)_{1-b}Zn_bO_2$, wherein $0.03{\leq}x{\leq}0.15$, $0.01{\leq}y{\leq}0.05$, $1{\leq}a{\leq}1.1$, and $0<b{\leq}0.02$.

The present disclosure aims to provide an MgO-coated nickel-cobalt-aluminium ternary lithium ion battery cathode material excellent in cycle performance and a preparation method thereof, a lithium ion battery using the cathode material and application of the cathode material.

In order to solve the above technical problems, the technical solution of the present disclosure is that an MgO-coated nickel-cobalt-aluminium ternary lithium ion battery cathode material includes a lithium nickel cobalt aluminate material and MgO which coats the surface of the lithium nickel cobalt aluminate material, wherein the chemical formula of the MgO-coated nickel-cobalt-aluminium ternary lithium ion battery cathode material is shown in formula (I):

$$(Li,Ni_{1-x-y}Co_xMg_y)_{1-b}Mg_bO_2 \qquad (I)$$

a, b, x, and y are mole fractions, $x>0$, $y>0$, $1-x-y>0$, $1{\leq}a{\leq}1.1$, and $0<b{\leq}0.02$.

Preferably, $0.03{\leq}x{\leq}0.15$, $0.01{\leq}y{\leq}0.05$, $1{\leq}a{\leq}1.05$, and $0<b{\leq}0.01$.

Preferably, $x=0.15$, $y=0.035$, $a=1.035$, and $b=0.0078$.

Preferably, $x=0.15$, $y=0.035$, $a=1.035$, and $b=0.0017$.

In order to solve the above technical problems, the present disclosure further provides a preparation method of the MgO-coated nickel-cobalt-aluminium ternary lithium ion battery cathode material, including the following steps:

step (1), first sintering: sintering a ternary cathode material precursor $Ni_{1-x-y}Co_xMg_y(OH)_{2+y}$ at a temperature of 200 to 1000 °C for 6 to 20 hours;

step (2), second sintering: adding a lithium source to the product obtained by sintering in step (1) for mixing and grinding uniformly, then sintering in air or oxygen at a temperature of 500 to 1000 °C for 8 to 24 hours, and cooling to room temperature at a rate of 0.01 to 2.5 °C/min after complete sintering; and

step (3), third sintering: adding a coating material MgO to the product obtained by sintering in step (2), and sintering at a temperature of 500 to 1000 °C for 1 to 12 hours to obtain an MgO-coated nickel-cobalt-aluminium ternary lithium ion battery cathode material $(Li_aNi_{1-x-y}Co_xMg_y)_{1-b}Mg_bO_2$, $0.03\leq x\leq0.15$, $0.01\leq y\leq0.05$, $1\leq a\leq1.1$, and $0<b\leq0.02$.

Compared with the prior art, the coated nickel-cobalt-aluminium ternary lithium ion battery cathode material provided by the present disclosure has the advantages that the coating does not participate in electrochemical reaction, thereby effectively improving the structural stability of the nickel-cobalt-aluminium ternary lithium ion battery cathode material, and improving the electrochemical performance of the nickel-cobalt-aluminium ternary lithium ion battery cathode material; and the coated nickel-cobalt-aluminium ternary lithium ion battery cathode material has higher capacity retention ratio and more stable cycle performance.

The present disclosure aims to provide a doped nickel-cobalt-aluminium ternary lithium ion battery cathode material excellent in cycle performance and a preparation method thereof for improving the cycle stability of the nickel-cobalt-aluminium ternary lithium ion battery cathode material, reducing the surface alkali residue of the nickel-cobalt-aluminium ternary lithium ion battery cathode material, and improving the performance of battery cells; and to provide a lithium ion battery using the cathode material and application of the cathode material.

In order to solve the above technical problems, the technical solution of the present disclosure is that a doped nickel-cobalt-aluminium ternary lithium ion cathode material is provided, and the chemical formula of the doped nickel-cobalt-aluminium ternary lithium ion cathode material is shown in formula (I):

$$(Li,Ni_{1-x-y}Co_xAl_y)_{1-b}M_bO_2 \qquad (I)$$

where a, b, x, and y are mole fractions, $x>0$, $y>0$, $1-x-y>0$, $1\leq a\leq1.1$, and $0<b\leq0.01$;

M is selected from one or more of an alkali metal element, an alkaline earth metal element, an element from group XIII, an element from group XIV, a transition metal element, and a rare earth element.

Preferably, $0.03\leq x\leq0.15$, $0.01\leq y\leq0.05$, $1\leq a\leq1.05$, and $0<b\leq0.005$.
Preferably, M is Ti, $x=0.15$, $y=0.035$, $a=1.035$, and $b=0.0007$.
Preferably, M is Ti, $x=0.15$, $y=0.035$, $a=1.035$, and $b=0.0019$.
Preferably, M is Al, $x=0.15$, $y=0.035$, $a=1.035$, and $b=0.016$.
Preferably, M is Al, $x=0.15$, $y=0.035$, $a=1.035$, and $b=0.003$.
Preferably, M is Mg, $x=0.15$, $y=0.035$, $a=1.035$, and $b=0.0017$.
Preferably, M is Mg, $x=0.15$, $y=0.035$, $a=1.035$, and $b=0.0025$.
In order to solve the above technical problems, the present disclosure further provides a preparation method of the doped nickel-cobalt-aluminium ternary lithium ion battery cathode material, including the following steps:

step (1), first sintering: sintering a ternary cathode material precursor $Ni_{1-x-y}Co_xAl_y(OH)_{2+y}$;
step (2), second sintering: adding a lithium source to the product obtained by sintering in step (1) for grinding, sintering after uniform grinding, and then cooling to room temperature after complete sintering, wherein a doping material metal M' compound is added in step (1), or mixed and ground with the lithium source in step (2), or added in step (1) and step (2) respectively; and
step (3), third sintering: sintering the product obtained by sintering in step (2) to obtain a doped nickel-cobalt-aluminium ternary lithium ion battery cathode material $(Li_aNi_{1-x-y}Co_xAl_y)_{1-b}M_bO_2$, wherein $0.03\leq x\leq0.15$, $0.01\leq y\leq0.05$, $1\leq a\leq1.05$, and $0<b\leq0.005$.

Preferably, in step (1), the sintering time is 6 to 20 hours, and the sintering temperature is 200 to 1000 °C.
Preferably, in step (2), the lithium source is one of lithium hydroxide, lithium acetate, lithium oxalate, lithium carbonate, lithium nitrate, lithium chloride and lithium fluoride.
Preferably, in step (2), the lithium source is lithium hydroxide monohydrate, and the lithium hydroxide monohydrate is dried to completely lose crystal water and then mixed with the product obtained by sintering in step (1).
Preferably, in step (2), the sintering time is 8 to 24 hours, and the sintering temperature is 500 to 1000 °C.
Preferably, in step (2), the cooling rate is 0.01 to 2.5 °C/min.
Preferably, in step (2), the cooling rate is 0.02 to 1 °C/min.
Preferably, in step (2), the lithium source is added in a molar ratio of Li to (Ni+Co+Al) in the ternary cathode material precursor of 1 : 1 to 1.1 : 1.
Preferably, the sintering in step (2) is carried out in air or oxygen.
Preferably, the doping material in step (2) is selected from one or more of an oxide of metal M, a fluoride of metal M, a sulfide of metal M, a telluride of metal M, a selenide of metal M, an antimonide of metal M, a phosphide of metal M and a composite oxide of metal M.

Preferably, in step (3), the sintering time is 1 to 12 hours, and the sintering temperature is 500 to 1000 °C.

The present disclosure aims to provide a Ti-doped nickel-cobalt-aluminium ternary lithium ion battery cathode material excellent in cycle performance and a preparation method thereof for improving the cycle stability of the nickel-cobalt-aluminium ternary material, reducing the surface alkali residue of the nickel-cobalt-aluminium ternary lithium ion battery cathode material, and improving the performance of battery cells; and to provide a lithium ion battery using the cathode material and application of the cathode material.

In order to solve the above technical problems, the technical solution of the present disclosure is that a Ti-doped nickel-cobalt-aluminium ternary lithium ion battery cathode material is provided, and the chemical formula of the Ti-doped nickel-cobalt-aluminium ternary lithium ion battery cathode material is shown in formula (I):

$$(Li_aNi_{1-x-y}Co_xAl_y)_{1-b}Ti_bO_2 \qquad (I)$$

where a, b, x, and y are mole fractions, $x > 0$, $y > 0$, $1-x-y > 0$, $1 \leq a \leq 1.1$, and $0 < b \leq 0.01$.

Preferably, $0.03 \leq x \leq 0.15$, $0.01 \leq y \leq 0.05$, $1 \leq a \leq 1.05$, and $0 < b \leq 0.005$.

Preferably, $x = 0.15$, $y = 0.035$, $a = 1.035$, and $b = 0.0007$.

Preferably, $x = 0.15$, $y = 0.035$, $a = 1.035$, and $b = 0.0019$.

In order to solve the above technical problems, the present disclosure further provides a preparation method of the Ti-doped nickel-cobalt-aluminium ternary lithium ion battery cathode material, including the following steps:

step (1), first sintering: sintering a ternary cathode material precursor $Ni_{1-x-y}Co_xAl_y(OH)_{2+y}$;
step (2), second sintering: adding a lithium source to the product obtained by sintering in step (1) for grinding, sintering after uniform grinding, and then cooling to room temperature after complete sintering, wherein a doping material is added in step (1), or mixed and ground with the lithium source in step (2), or added in step (1) and step (2) respectively; and
step (3), third sintering: sintering the product obtained by sintering in step (2) to obtain a Ti-doped nickel-cobalt-aluminium ternary lithium ion battery cathode material $(Li_aNi_{1-x-y}Co_xAl_y)_{1-b}Ti_bO_2$, wherein $0.03 \leq x \leq 0.15$, $0.01 < y < 0.05$, $1 \leq a \leq 1.05$, and $0 < b \leq 0.005$.

Preferably, the doping material in step (2) is selected from one or more of an oxide of metal Ti, a fluoride of metal Ti, a sulfide of metal Ti, a telluride of metal Ti, a selenide of metal Ti, an antimonide of metal Ti, a phosphide of metal Ti and a composite oxide of metal Ti.

The present disclosure aims to provide an Al-doped nickel-cobalt-aluminium ternary lithium ion battery cathode material and a preparation method thereof for improving the cycle stability of the nickel-cobalt-aluminium ternary lithium ion battery cathode material, and reducing the surface alkali residue of the nickel-cobalt-aluminium ternary lithium ion battery cathode material, and to provide a lithium ion battery using the cathode material and application of the cathode material.

In order to solve the above technical problems, the technical solution of the present disclosure is that an Al-doped nickel-cobalt-aluminium ternary lithium ion battery cathode material is provided, and the chemical formula of the Al-doped nickel-cobalt-aluminium ternary lithium ion battery cathode material is shown in formula (I):

$$(Li_aNi_{1-x-y}CO_xAl_y)_{1-b}Al_bO_2 \qquad (I)$$

where a, b, x, and y are mole fractions, $x > 0$, $y > 0$, $1-x-y > 0$, $1 \leq a \leq 1.1$, and $0 < b \leq 0.01$.

Preferably, $0.03 \leq x \leq 0.15$, $0.01 \leq y \leq 0.05$, $1 \leq a \leq 1.05$, and $0 < b \leq 0.005$.

Preferably, $x = 0.15$, $y = 0.035$, $a = 1.035$, and $b = 0.016$.

Preferably, $x = 0.15$, $y = 0.035$, $a = 1.035$, and $b = 0.003$.

In order to solve the above technical problems, the present disclosure further provides a preparation method of the Al-doped nickel-cobalt-aluminium ternary lithium ion battery cathode material, including the following steps:

step (1), first sintering: sintering a ternary cathode material precursor $Ni_{1-x-y}Co_xAl_y(OH)_{2+y}$;
step (2), second sintering: adding a lithium source to the product obtained by sintering in step (1) for grinding, sintering after uniform grinding, and then cooling to room temperature after complete sintering, wherein a doping material is added in step (1), or mixed and ground with the lithium source in step (2), or added in step (1) and step (2) respectively; and
step (3), third sintering: sintering the product obtained by sintering in step (2) to obtain an Al-doped nickel-cobalt-aluminium ternary lithium ion battery cathode material $(Li_aNi_{1-x-y}Co_xAl_y)_{1-b}Al_bO_2$, wherein $0.03 \leq x \leq 0.15$, $0.01 \leq y \leq 0.05$, $1 \leq a \leq 1.05$, and $0 < b \leq 0.005$.

Preferably, the doping material in step (2) is selected from one or more of an oxide of metal Al, a fluoride of metal Al, a sulfide of metal Al, a telluride of metal Al, a selenide of metal Al, an antimonide of metal Al, a phosphide of metal Al and a composite oxide of metal Al.

The present disclosure aims to provide an Mg-doped nickel-cobalt-aluminium ternary lithium ion battery cathode material and a preparation method thereof for improving the cycle stability of the nickel-cobalt-aluminium ternary material, and reducing the surface alkali residue of the nickel-cobalt-aluminium ternary cathode material, and to provide a lithium ion battery using the cathode material and application of the cathode material.

In order to solve the above technical problems, the technical solution of the present disclosure is that an Mg-doped nickel-cobalt-aluminium ternary cathode material is provided, and the chemical formula of the Mg-doped nickel-cobalt-aluminium ternary cathode material is shown in formula (I):

$$(Li_aNi_{1-x-y}Co_xAl_y)_{1-b}Mg_bO_2 \qquad (I)$$

where a, b, x, and y are mole fractions, $x>0$, $y>0$, $1-x-y>0$, $1 \leq a \leq 1.1$, and $0 < b \leq 0.01$.

Preferably, $0.03 \leq x \leq 0.15$, $0.01 \leq y \leq 0.05$, $1 \leq a \leq 1.05$, and $0 < b \leq 0.005$.

Preferably, $x=0.15$, $y=0.035$, $a=1.035$, and $b=0.0017$.

Preferably, $x=0.15$, $y=0.035$, $a=1.035$, and $b=0.0025$.

In order to solve the above technical problems, the present disclosure further provides a preparation method of the Mg-doped nickel-cobalt-aluminium ternary cathode material, including the following steps:

step (1), first sintering: sintering a ternary cathode material precursor $Ni_{1-x-y}Co_xAl_y(OH)_{2+y}$;

step (2), second sintering: adding a lithium source to the product obtained by sintering in step (1) for grinding, sintering after uniform grinding, and then cooling to room temperature after complete sintering;

wherein a doping material is added in step (1), or mixed and ground with the lithium source in step (2), or added in step (1) and step (2) respectively; and

step (3), third sintering: sintering the product obtained by sintering in step (2) to obtain an Mg-doped nickel-cobalt-aluminium ternary cathode material $(Li_aNi_{1-x-y}Co_xAl_y)_{1-b}Mg_bO_2$, wherein $0.03 \leq x \leq 0.15$, $0.01 \leq y \leq 0.05$, $1 \leq a \leq 1.05$, and $0 < b \leq 0.005$.

Preferably, the doping material in step (2) is selected from one or more of an oxide of metal Mg, a fluoride of metal Mg, a sulfide of metal Mg, a telluride of metal Mg, a selenide of metal Mg, an antimonide of metal Mg, a phosphide of metal Mg and a composite oxide of metal Mg.

The doped nickel-cobalt-aluminium ternary lithium ion cathode material provided by the present disclosure has the advantages that the structural stability of the nickel-cobalt-aluminium ternary lithium ion cathode material is effectively improved, the strong side reaction between the nickel-cobalt-aluminium ternary lithium ion battery cathode material and the organic electrolyte is reduced, the impedance of the battery during charging and discharging is reduced, the electrochemical performance of the nickel-cobalt-aluminium ternary lithium ion cathode material is improved, and the doped nickel-cobalt-aluminium ternary lithium ion cathode material has higher capacity retention ratio and more stable cycle performance.

According to the doped nickel-cobalt-aluminium ternary lithium ion cathode material provided by the present disclosure, the nickel-cobalt-aluminium ternary lithium ion cathode material is doped with a metal to reduce the content of active lithium on the surface of the nickel-cobalt-aluminium ternary lithium ion cathode material, thereby reducing the content of LiOH and $Li_2CO_3$ on the surface of the nickel-cobalt-aluminium ternary lithium ion cathode material, effectively reducing the surface alkali residue of the nickel-cobalt-aluminium ternary lithium ion cathode material, further reducing the attacks of alkaline matters on the surface of the nickel-cobalt-aluminium ternary lithium ion cathode material to a binder in cathode glue during the preparation of the cathode material, preventing the binder from forming double bonds to cause gluing, avoiding causing slurry jellies, improving the coating effect, and improving the performance of battery cells.

The present disclosure aims to provide a doped and coated nickel-cobalt-aluminium ternary lithium ion battery cathode material and a preparation method thereof for improving the cycle stability of the nickel-cobalt-aluminium ternary lithium ion battery cathode material, and reducing the surface alkali residue of the nickel-cobalt-aluminium ternary lithium ion battery cathode material, and to provide a lithium ion battery using the cathode material and application of the cathode material.

In order to solve the above technical problems, the technical solution of the present disclosure is that a doped and coated nickel-cobalt-aluminium ternary lithium ion battery cathode material is provided, and the chemical formula of the doped and coated nickel-cobalt-aluminium ternary lithium ion battery cathode material is shown in formula (I):

$$(Li_aNi_{1-x-y}Co_xAl_y)_{1-b}M_{b1}M'_{b2}O_2 \qquad (I)$$

a, b, x, and y are mole fractions, x>0, y>0, 1-x-y>0, $1 \leq a \leq 1.1$, b=b1+b2, and $0<b \leq 0.01$;

M and M' are selected from one or more of an alkali metal element, an alkaline earth metal element, an element from group XIII, an element from group XIV, a transition metal element, and a rare earth element.

Preferably, $0.03 \leq x \leq 0.15$, $0.01 \leq y \leq 0.05$, $1 \leq a \leq 1.05$, and $0<b \leq 0.005$.

Preferably, M is Ti, M' is Zr, x=0.15, y=0.035, a=1.035, b1=0.0007, and b2=0.0011.

Preferably, the coating method is one of a dry method, an aqueous phase wet method, and an organic phase wet method.

In order to solve the above technical problems, the present disclosure further provides a preparation method of the doped and coated nickel-cobalt-aluminium ternary lithium ion battery cathode material, including the following steps:

step (1), first sintering: sintering a ternary cathode material precursor $Ni_{1-x-y}Co_xAl_y(OH)_{2+y}$;

step (2), second sintering: adding a lithium source to the product obtained by sintering in step (1) for grinding, sintering after uniform grinding, and then cooling to room temperature after complete sintering, wherein a doping material metal M' compound is added in step (1), or mixed and ground with the lithium source in step (2), or added in step (1) and step (2) respectively; and

step (3), third sintering: adding a coating material metal M' compound to the product obtained by sintering in step (2) for sintering to obtain a doped and coated nickel-cobalt-aluminium ternary lithium ion battery cathode material $(Li_aNi_{1-x-y}Co_xAl_y)_{1-b}M_{b1}M'b_2O_2$, wherein a, b, x, and y are mole fractions, x>0, y>0, 1-x-y>0, $1 \leq a \leq 1.1$, b=b1+b2, and $0<b \leq 0.01$.

Preferably, in step (1), the sintering time is 6 to 20 hours, and the sintering temperature is 200 to 1000 °C.

Preferably, in step (2), the lithium source is one of lithium hydroxide, lithium acetate, lithium oxalate, lithium carbonate, lithium nitrate, lithium chloride and lithium fluoride.

Preferably, in step (2), the lithium source is lithium hydroxide monohydrate, and the lithium hydroxide monohydrate is dried to completely lose crystal water and then mixed with the product obtained by sintering in step (1).

Preferably, in step (2), the sintering time is 8 to 24 hours, and the sintering temperature is 500 to 1000 °C.

Preferably, in step (2), the cooling rate is 0.01 to 2.5 °C/min.

Preferably, in step (2), the cooling rate is 0.02 to 1 °C/min.

Preferably, in step (2), the lithium source is added in a molar ratio of Li to (Ni+Co+Al) in the ternary cathode material precursor of 1 : 1 to 1.1 : 1.

Preferably, the sintering in step (2) is carried out in air or oxygen.

Preferably, the doping material in step (2) is selected from one or more of an oxide of metal M, a fluoride of metal M, a sulfide of metal M, a telluride of metal M, a selenide of metal M, an antimonide of metal M, a phosphide of metal M and a composite oxide of metal M.

Preferably, the coating material in step (3) is selected from one or more of an oxide of metal M', a fluoride of metal M', a sulfide of metal M', a telluride of metal M', a selenide of metal M', an antimonide of metal M', a phosphide of metal M' and a composite oxide of metal M'.

Preferably, the sintering time in step (3) is 1 to 12 hours, and the sintering temperature is 500 to 1000 °C.

Compared with the prior art, the doped and coated nickel-cobalt aluminium ternary lithium ion battery cathode material provided by the present disclosure has the advantages that metal ions are doped in ternary material lattices of a nickel-cobalt-aluminium ternary lithium ion battery cathode material to effectively improve the structural stability of the nickel-cobalt-aluminium ternary lithium ion battery cathode material; at the same time, the nickel-cobalt-aluminium ternary lithium ion battery cathode material is coated with a coating material which is preferentially generated at the sites of higher reactivity on the surface of a host material, thereby effectively eliminating the sites of higher reactivity on the surface of the host material, and further stabilizing the structure of the host material; the stability of the material structure helps to reduce the reactivity in the battery system of the cathode material, reduce the strong side reaction between the nickel-cobalt-aluminium ternary lithium ion battery cathode material and the organic electrolyte, and reduce the impedance of the battery during charging and discharging, thereby improving the electrochemical performance of the nickel-cobalt-aluminium ternary lithium ion battery cathode material; and the doped and coated nickel-cobalt-aluminium ternary lithium ion battery cathode material provided by the present disclosure has a higher capacity retention ratio and more stable cycle performance.

The present disclosure aims to provide a preparation method of a nickel-cobalt-aluminium ternary lithium ion battery cathode material for reducing the surface alkali residue of the nickel-cobalt-aluminium ternary lithium ion battery cathode material.

In order to solve the above technical problems, the technical solution of the present disclosure is that a preparation method of a nickel-cobalt-aluminium ternary lithium ion battery cathode material includes the following steps:

step (1), first sintering: sintering a ternary cathode material precursor $Ni_{1-x-y}Co_xAl_y(OH)_{2+y}$;
step (2), second sintering: adding a lithium source to the product obtained by sintering in step (1) for mixing and grinding, sintering in air or oxygen after uniform grinding, and then cooling to room temperature after complete sintering;
step (3), third sintering: sintering the product obtained by sintering in step (2), and then washing the sintered product; and
step (4), fourth sintering: sintering the product washed in step (3) to obtain a target product.

Preferably, in step (1), the sintering time is 6 to 20 hours, and the sintering temperature is 200 to 1000 °C.

Preferably, in step (2), the lithium source is one of lithium hydroxide, lithium acetate, lithium oxalate, lithium carbonate, lithium nitrate, lithium chloride and lithium fluoride.

Preferably, in step (2), the lithium source is lithium hydroxide monohydrate, and the lithium hydroxide monohydrate is dried to completely lose crystal water and then mixed with the product obtained by sintering in step (1).

Preferably, in step (2), the sintering time is 8 to 24 hours, and the sintering temperature is 500 to 1000 °C.

Preferably, in step (2), the cooling rate is 0.01 to 2.5 °C/min; or in step (2), the cooling rate is 0.02 to 1 °C/min.

Preferably, in step (2), the lithium source is added in a molar ratio of Li to (Ni+Co+Al) in the ternary cathode material precursor of 1 : 1 to 1.1 : 1.

Preferably, in step (3), the sintering time is 1 to 12 hours, and the sintering temperature is 500 to 1000 °C.

Preferably, the washing method in step (3) is flushing with carbon dioxide gas stream or washing with carbonated water. The flushing with carbon dioxide gas stream or washing with carbonated water can improve the washing efficiency and effectively reduce the surface alkali residue.

Preferably, in step (4), the sintering time is 0.5 to 12 hours, and the sintering temperature is 100 to 1000 °C.

Compared with the prior art, the present disclosure has the advantages that, by washing the nickel-cobalt-aluminium ternary lithium ion battery cathode material, the surface alkali residue of the obtained nickel-cobalt-aluminium ternary lithium ion battery cathode material is effectively reduced, the attacks of alkaline matters on the surface of the nickel-cobalt-aluminium ternary lithium ion battery cathode material to a binder in cathode glue during the preparation of the cathode material are reduced, the binder is prevented from forming double bonds, the coating effect is improved, and the performance of battery cells is improved.

The preparation method of the present disclosure is simple in technology, controllable in process, and easy for industrial mass production.

In order to solve the above technical problems, the present disclosure further provides a lithium ion battery, including a cathode, an anode, an electrolyte solution and a separator, and the cathode includes the above nickel-cobalt-aluminium ternary lithium ion battery cathode material or the nickel-cobalt-aluminium ternary lithium ion battery cathode material prepared by the above method.

According to the lithium ion battery provided by the present disclosure, the cathode uses the nickel-cobalt-aluminium ternary lithium ion battery cathode material provided by the present disclosure or the nickel-cobalt-aluminium ternary lithium ion battery cathode material prepared by the method provided by the present disclosure, so that the lithium ion battery provided by the present disclosure has the advantages of good cycle performance, long service life, high capacity retention ratio, high tap density, small volume, light weight and the like.

In order to solve the above technical problems, the present disclosure further provides application of the above nickel-cobalt-aluminium ternary lithium ion battery cathode material or a nickel-cobalt-aluminium ternary lithium ion battery cathode material prepared by the above method in preparation of lithium ion batteries, electronic product accumulators, industrial accumulators, and power supplies of electric vehicles and electric bicycles.

The nickel-cobalt-aluminium ternary lithium ion battery cathode material provided by the present disclosure or the nickel-cobalt-aluminium ternary lithium ion battery cathode material prepared by the method of the present disclosure is applied to lithium ion batteries, electronic product accumulators, industrial accumulators, and power supplies of electric vehicles and electric bicycles, so that the products related to the lithium ion batteries, electronic product accumulators, industrial accumulators, power supplies of electric vehicles and electric bicycles and the like have the advantages of long service life, long endurance, short charging time, light weight, sufficient power and the like.

BRIEF DESCRIPTION OF THE DRAWINGS

Fig. 1 is a comparison diagram of cycle performance test on a $ZrO_2$-coated nickel-cobalt-aluminium ternary cathode material prepared in Embodiment 1 of the present disclosure and an uncoated nickel-cobalt-aluminium ternary cathode material prepared in Comparative Example 1.

Fig. 2 is a comparison diagram of cycle performance test on a $ZrO_2$-coated nickel-cobalt-aluminium ternary cathode material prepared in Embodiment 2 of the present disclosure and an uncoated nickel-cobalt-aluminium ternary cathode material prepared in Comparative Example 2.

Fig. 3 is a comparison diagram of cycle performance test on an $Al_2O_3$-coated nickel-cobalt-aluminium ternary cathode material prepared in Embodiment 3 of the present disclosure and an uncoated nickel-cobalt-aluminium ternary cathode material prepared in Comparative Example 1.

Fig. 4 is a comparison diagram of cycle performance test on an $Al_2O_3$-coated nickel-cobalt-aluminium ternary cathode material prepared in Embodiment 4 of the present disclosure and an uncoated nickel-cobalt-aluminium ternary cathode material prepared in Comparative Example 2.

Fig. 5 is a comparison diagram of cycle performance test on a ZnO-coated nickel-cobalt-aluminium ternary cathode material prepared in Embodiment 5 of the present disclosure and an uncoated nickel-cobalt-aluminium ternary cathode material prepared in Comparative Example 1.

Fig. 6 is a comparison diagram of cycle performance test on a ZnO-coated nickel-cobalt-aluminium ternary cathode material prepared in Embodiment 6 of the present disclosure and an uncoated nickel-cobalt-aluminium ternary cathode material prepared in Comparative Example 2.

Fig. 7 is a comparison diagram of cycle performance test on an MgO-coated nickel-cobalt-aluminium ternary cathode material prepared in Embodiment 7 of the present disclosure and an uncoated nickel-cobalt-aluminium ternary cathode material prepared in Comparative Example 1.

Fig. 8 is a comparison diagram of cycle performance test on an MgO-coated nickel-cobalt-aluminium ternary cathode material prepared in Embodiment 8 of the present disclosure and an uncoated nickel-cobalt-aluminium ternary cathode material prepared in Comparative Example 2.

Fig. 9 is a comparison diagram of cycle performance test on a Ti-doped nickel-cobalt-aluminium ternary lithium ion cathode material $(Li_{1.035}Ni_{0.815}Co_{0.15}Al_{0.035})_{0.9993}Ti_{0.0007}O_2$ prepared in Embodiment 9 of the present disclosure and an undoped nickel-cobalt-aluminium ternary lithium ion cathode material prepared in Comparative Example 1.

Fig. 10 is a comparison diagram of cycle performance test on a Ti-doped nickel-cobalt-aluminium ternary lithium ion cathode material $(Li_{1.035}Ni_{0.815}Co_{0.15}Al_{0.035})_{0.9981}Ti_{0.0019}O_2$ prepared in Embodiment 10 of the present disclosure and an undoped nickel-cobalt-aluminium ternary lithium ion cathode material prepared in Comparative Example 2.

Fig. 11 is a comparison diagram of cycle performance test on an Al-doped nickel-cobalt-aluminium ternary lithium ion cathode material $(Li_{1.035}Ni_{0.815}Co_{0.15}Al_{0.035})_{0.9984}Al_{0.0016}O_2$ prepared in Embodiment 11 of the present disclosure and an undoped nickel-cobalt-aluminium ternary lithium ion cathode material prepared in Comparative Example 1.

Fig. 12 is a comparison diagram of cycle performance test on an Al-doped nickel-cobalt-aluminium ternary lithium ion cathode material $(Li_{1.035}Ni_{0.815}Co_{0.15}Al_{0.035})_{0.997}Al_{0.003}O_2$ prepared in Embodiment 12 of the present disclosure and an undoped nickel-cobalt-aluminium ternary lithium ion cathode material prepared in Comparative Example 2.

Fig. 13 is a comparison diagram of cycle performance test on an Mg-doped nickel-cobalt-aluminium ternary lithium ion cathode material $(Li_{1.035}Ni_{0.815}Co_{0.15}Al_{0.035})_{0.9983}Mg_{0.0017}O_2$ prepared in Embodiment 13 of the present disclosure and an undoped nickel-cobalt-aluminium ternary lithium ion cathode material prepared in Comparative Example 1.

Fig. 14 is a comparison diagram of cycle performance test on an Mg-doped nickel-cobalt-aluminium ternary lithium ion cathode material $(Li_{1.035}Ni_{0.815}Co_{0.15}Al_{0.035})_{0.9975}Mg_{0.0025}O_2$ prepared in Embodiment 14 of the present disclosure and an undoped nickel-cobalt-aluminium ternary lithium ion cathode material prepared in Comparative Example 2.

Fig. 15 is a comparison diagram of cycle performance test on a Ti-doped and $ZrO_2$-coated nickel-cobalt-aluminium ternary lithium ion battery cathode material prepared in Embodiment 15 of the present disclosure and an undoped and uncoated nickel-cobalt-aluminium ternary lithium ion battery cathode material prepared in Comparative Example 1.

DESCRIPTION OF THE EMBODIMENTS

In order to make the objectives, technical solutions and beneficial effects of the present disclosure clearer, the following further describes the present disclosure in detail with reference to the embodiments. However, it should be appreciated that the embodiments of the present disclosure are merely for interpreting the present disclosure, rather than limiting the present disclosure, and the embodiments of the present disclosure are not limited to the embodiments given in the Description.

The following further describes the present disclosure with reference to specific embodiments.

Embodiment 1

The present embodiment provides a nickel-cobalt-aluminium ternary lithium ion battery cathode material coated with a coating material ZrO2, the chemical formula of which is $(Li_{1.035}Ni_{0.815}Co_{0.15}Al_{0.035})_{0.9984}Mg_{0.0016}O_2$ where M is Zr, x=0.15, y=0.035, a=1.035, and b=0.0016.

A preparation method of the coated nickel-cobalt-aluminium ternary lithium ion battery cathode material $(Li_{1.035}Ni_{0.815}Co_{0.15}Al_{0.035})_{0.9984}Zr_{0.0016}O_2$ according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing with the product obtained by sintering in step (1) in proportion, the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 715 °C, reacting for 16.5 hours, and then cooling to room temperature at a rate of 0.3 °C/min; and

step (3), third sintering: mixing the product obtained by sintering in step (2) with a coating material $ZrO_2$, the amount of $ZrO_2$ added being in a molar ratio of Zr in the $ZrO_2$ to (Ni+Co+Al) in the ternary cathode material precursor of 0.0016: 0.9984; heating to 650 °C, sintering for 3.5 hours, and cooling to room temperature, thus obtaining a target product $(Li_{1.035}Ni_{0.815}Co_{0.15}Alo_{0.35})_{0.9984}Zr_{0.0016}O_2$. The ICP element analysis test results show that the molar percentages of metals Ni, Co, Al and Zr are as follows:

| Element content (Mol%) | | | |
|---|---|---|---|
| Ni | Co | Al | Zr |
| 81.61 | 14.73 | 3.50 | 0.16 |

Embodiment 2

The present embodiment provides a nickel-cobalt-aluminium ternary lithium ion battery cathode material coated with a coating material $ZrO_2$, the chemical formula of which is $(Li_{1.035}Ni_{0.815}Co_{0.15}Al_{0.035})_{0.9992}Zr_{0.0008}O_2$, where M is Zr, x=0.15, y=0.035, a=1.035, and b=0.0008.

A preparation method of the coated nickel-cobalt-aluminium ternary lithium ion battery cathode material $(Li_{1.035}Ni_{0.815}Co_{0.15}Al_{0.035})_{0.9992}Zr_{0.0008}O_2$, according to the present embodiment includes the following steps:

step (1), first sintering: sintering a ternary cathode material precursor $Ni_{1-x-y}Co_xAl_y(OH)_{2+y}$, heating to 600 °C and reacting for 6.5 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 775 °C, reacting for 8 hours, and then cooling to room temperature at a rate of 0.3 °C/min; and

step (3), third sintering: adding a coating material $ZrO_2$ to the product obtained by sintering in step (2), the amount of $ZrO_2$ added being in a molar ratio of Zr in the $ZrO_2$ to (Ni+Co+Al) in the ternary cathode material precursor of 0.0008: 0.9992; heating to 615 °C, sintering for 5 hours, and cooling to room temperature, thus obtaining a target product $(Li_{1.035}Ni_{0.815}Co_{0.15}Al_{0.035})_{0.9992}Zr_{0.0008}O_2$, The ICP element analysis test results show that the molar percentages of metals Ni, Co, Al and Zr are as follows:

| Element content (Mol%) | | | |
|---|---|---|---|
| Ni | Co | Al | Zr |
| 81.67 | 14.75 | 3.50 | 0.08 |

Embodiment 3

The present embodiment provides an $Al_2O_3$-coated nickel-cobalt-aluminium ternary lithium ion battery cathode material, the chemical formula of which is $(Li_{1.035}Ni_{0.815}Co_{0.15}Al_{0.035})_{0.998}Al_{0.002}O_2$, where M is Al, x=0.15, y=0.035, a=1.035, and b=0.002.

A preparation method of the coated nickel-cobalt-aluminium ternary lithium ion battery cathode material $(Li_{1.035}Ni_{0.815}Co_{0.15}Al_{0.035})_{0.998}Al_{0.002}O_2$, according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 715 °C, reacting for 16.5 hours, and then cooling to room temperature at a rate of 0.3 °C/min; and

step (3), third sintering: adding a coating material $Al_2O_3$ to the product obtained by sintering in step (2), the amount of $Al_2O_3$ added being in a molar ratio of Al in the $Al_2O_3$ to (Ni+Co+Al) in the ternary cathode material precursor of 0.002: 0.998; heating to 650 °C, sintering for 3.5 hours, and cooling to room temperature, thus obtaining a target product $(Li_{1.035}Ni_{0.815}Co_{0.15}Al_{0.035})_{0.998}Al_{0.002}O_2$, The ICP element analysis test shows that the molar percentages of metals Ni, Co and Al are as follows:

| Element content (Mol%) | | |
| --- | --- | --- |
| Ni | Co | Al |
| 81.57 | 14.73 | 3.70 |

Embodiment 4

The present embodiment provides an $Al_2O_3$-coated nickel-cobalt-aluminium ternary lithium ion battery cathode material, the chemical formula of which is $(Li_{1.035}Ni_{0.815}Co_{0.15}Al_{0.035})_{0.9945}Al_{0.0055}O_2$, where M is Al, x=0.15, y=0.035, a=1.035, and b=0.0055.

A preparation method of the coated nickel-cobalt-aluminium ternary lithium ion battery cathode material $(Li_{1.035}Ni_{0.815}Co_{0.15}Al_{0.035})_{0.9945}Al_{0.0055}O_2$, according to the present embodiment includes the following steps:

step (1), first sintering: sintering a ternary cathode material precursor $Ni_{1-x-y}Co_xAl_y(OH)_{2+y}$, heating to 600 °C and reacting for 6.5 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 775 °C, reacting for 8 hours, and then cooling to room temperature at a rate of 0.3 °C/min; and

step (3), third sintering: adding a coating material $Al_2O_3$ to the product obtained by sintering in step (2), the amount of $Al_2O_3$ added being in a molar ratio of Al in the $Al_2O_3$ to (Ni+Co+Al) in the ternary cathode material precursor of 0.0055: 0.9945; heating to 615 °C, sintering for 5 hours, and cooling to room temperature, thus obtaining a target product $(Li_{1.035}Ni_{0.815}Co_{0.15}Al_{0.035})_{0.9945}Al_{0.0055}O_2$, The ICP element analysis test shows that the molar percentages of metals Ni, Co and Al are as follows:

| Element content (Mol%) | | |
| --- | --- | --- |
| Ni | Co | Al |
| 81.29 | 14.68 | 4.03 |

Embodiment 5

The present embodiment provides a ZnO-coated nickel-cobalt-aluminium ternary lithium ion battery cathode material, the chemical formula of which is $(Li_{1.035}Ni_{0.815}Co_{0.15}Al_{0.035})_{0.9971}Al_{0.0029}O_2$, where M is Zn, x=0.15, y=0.035, a=1.035, and b=0.0029.

A preparation method of the coated nickel-cobalt-aluminium ternary lithium ion battery cathode material $(Li_{1.035}Ni_{0.815}Co_{0.15}Al_{0.035})_{0.9971}Al_{0.0029}O_2$, according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 715 °C, reacting for 16.5 hours, and then cooling to room temperature at a rate of 0.3 °C/min; and

step (3), third sintering: adding a coating material ZnO to the product obtained by sintering in step (2), the amount of ZnO added being in a molar ratio of Zn in the ZnO to (Ni+Co+Al) in the ternary cathode material precursor of 0.0029: 0.9971; heating to 650 °C, sintering for 3.5 hours, and cooling to room temperature, thus obtaining a target product $(Li_{1.035}Ni_{0.815}Co_{0.15}Al_{0.035})_{0.9971}Zn_{0.0029}O_2$, The ICP element analysis test shows that the molar percentages of metals Ni, Co, Al and Zn are as follows:

| Element content (Mol%) | | | |
|---|---|---|---|
| Ni | Co | Al | Zn |
| 81.50 | 14.71 | 3.50 | 0.29 |

Embodiment 6

The present embodiment provides a ZnO-coated nickel-cobalt-aluminium ternary lithium ion battery cathode material, the chemical formula of which is $(Li_{1.035}Ni_{0.815}Co_{0.15}Al_{0.035})_{0.9993}Zn_{0.0007}O_2$, where M is Zn, x=0.15, y=0.035, a=1.035, and b=0.0007.

A preparation method of the coated nickel-cobalt-aluminium ternary lithium ion battery cathode material $(Li_{1.035}Ni_{0.815}Co_{0.15}Al_{0.035})_{0.9993}Zn_{0.0007}O_2$, according to the present embodiment includes the following steps:

step (1), first sintering: sintering a ternary cathode material precursor $Ni_{1-x-y}Co_xAl_y(OH)_{2+y}$, heating to 600 °C and reacting for 6.5 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 775 °C, reacting for 8 hours, and then cooling to room temperature at a rate of 0.3 °C/min; and

step (3), third sintering: adding a coating material ZnO to the product obtained by sintering in step (2), the amount of ZnO added being in a molar ratio of Zn in the ZnO to (Ni+Co+Al) in the ternary cathode material precursor of 0.0007: 0.9993; heating to 615 °C, sintering for 5 hours, and cooling to room temperature, thus obtaining a target product $(Li_{1.035}Ni_{0.815}Co_{0.15}Al_{0.035})_{0.9993}Zn_{0.0007}O_2$, The ICP element analysis test shows that the molar percentages of metals Ni, Co, Al and Zn are as follows:

| Element content (Mol%) | | | |
|---|---|---|---|
| Ni | Co | Al | Zn |
| 81.68 | 14.75 | 3.50 | 0.07 |

Embodiment 7

The present embodiment provides an MgO-coated nickel-cobalt-aluminium ternary lithium ion battery cathode material, the chemical formula of which is $(Li_{1.035}Ni_{0.815}Co_{0.15}Al_{0.035})_{0.9922}Mg_{0.0078}O_2$, where M is Mg, x=0.15, y=0.035, a=1.035, and b=0.0078.

A preparation method of the coated nickel-cobalt-aluminium ternary lithium ion battery cathode material $(Li_{1.035}Ni_{0.815}Co_{0.15}Al_{0.035})_{0.9922}Mg_{0.0078}O_2$, according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; grinding uniformly, then sintering, heating to 715 °C, reacting for 16.5 hours, and then cooling to room temperature at a rate of 0.3 °C/min; and

step (3), third sintering: adding a coating material MgO to the product obtained by sintering in step (2), the amount of MgO added being in a molar ratio of Mg in the MgO to (Ni+Co+Al) in the ternary cathode material precursor of 0.0078: 0.9922; heating to 650 °C, sintering for 3.5 hours, and cooling to room temperature, thus obtaining a target product $(Li_{1.035}Ni_{0.815}Co_{0.15}Al_{0.035})_{0.9922}Mg_{0.0078}O_2$, The ICP element analysis test shows that the molar percentages of metals Ni, Co, Al and Mg are as follows:

| Element content (Mol%) | | | |
| --- | --- | --- | --- |
| Ni | Co | Al | Mg |
| 81.10 | 14.64 | 3.48 | 0.78 |

Embodiment 8

The present embodiment provides an MgO-coated nickel-cobalt-aluminium ternary lithium ion battery cathode material, the chemical formula of which is $(Li_{1.035}Ni_{0.815}Co_{0.15}Al_{0.035})_{0.9983}Mg_{0.0017}O_2$, where M is Mg, x=0.15, y=0.035, a=1.035, and b=0.0017.

A preparation method of the coated nickel-cobalt-aluminium ternary lithium ion battery cathode material $(Li_{1.035}Ni_{0.815}Co_{0.15}Al_{0.035})_{0.9983}Mg_{0.0017}O_2$, according to the present embodiment includes the following steps:

step (1), first sintering: sintering a ternary cathode material precursor $Ni_{1-x-y}Co_xAl_y(OH)_{2+y}$, heating to 600 °C and reacting for 6.5 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 775 °C, reacting for 8 hours, and then cooling to room temperature at a rate of 0.3 °C/min; and

step (3), third sintering: adding a coating material MgO to the product obtained by sintering in step (2), the amount of MgO added being in a molar ratio of Mg in the MgO to (Ni+Co+Al) in the ternary cathode material precursor of 0.0017: 0.9983; heating to 615 °C, sintering for 5 hours, and cooling to room temperature, thus obtaining a target product $(Li_{1.035}Ni_{0.815}Co_{0.15}Al_{0.035})_{0.9983}Mg_{0.0017}O_2$, The ICP element analysis test shows that the molar percentages of metals Ni, Co, Al and Mg are as follows:

| Element content (Mol%) | | | |
| --- | --- | --- | --- |
| Ni | Co | Al | Mg |
| 81.60 | 14.73 | 3.50 | 0.17 |

Embodiment 9

Embodiment 9 provides a Ti-doped nickel-cobalt-aluminium ternary lithium ion cathode material $(Li_{1.035}Ni_{0.815}Co_{0.15}Al_{0.035})_{0.9993}Ti_{0.0007}O_2$, where M is Ti, x=0.15, y=0.035, a=1.035, and b=0.0007. A preparation method of the Ti-doped nickel-cobalt-aluminium ternary lithium ion cathode material $(Li_{1.035}Ni_{0.815}Co_{0.15}Al_{0.035})_{0.9993}Ti_{0.0007}O_2$, according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing and grinding with the product obtained by sintering in step (1) and a doping material $TiO_2$, the amount of lithium hydroxide monohydrate being in a molar ratio of Li in the lithium hydroxide monohydrate to (Ni+Co+Al) in the ternary cathode material precursor of 1.035: 1, the amount of $TiO_2$ added being in a molar ratio of Ti in the $TiO_2$ to (Ni+Co+Al) in the ternary cathode material precursor of 0.0007: 0.9993; sintering after uniform grinding, heating to 715 °C, sintering for 16.5 hours, and then cooling to room temperature at a rate of 0.3 °C/min; and

step (3), third sintering: heating the product obtained by sintering in step (2) to 650 °C, sintering for 3.5 hours, and cooling to room temperature, thus obtaining a target product $(Li_{1.035}Ni_{0.815}Co_{0.15}Al_{0.035})_{0.9993}Ti_{0.0007}O_2$, The ICP element analysis test shows that the molar percentages of metals Ni, Co, Al and Ti are as follows:

| Element content (Mol%) | | | |
| --- | --- | --- | --- |
| Ni | Co | Al | Ti |
| 81.68 | 14.75 | 3.50 | 0.07 |

Embodiment 10

Embodiment 10 provides a Ti-doped nickel-cobalt-aluminium ternary lithium ion cathode material

$(Li_{1.035}Ni_{0.815}Co_{0.15}Al_{0.035})_{0.9981}Ti_{0.0019}O_2$, where M is Ti, x=0.15, y=0.035, a=1.035, and b=0.0019. A preparation method of the Ti-doped nickel-cobalt-aluminium ternary lithium ion cathode material $(Li_{1.035}Ni_{0.815}Co_{0.15}Al_{0.035})_{0.9981}Ti_{0.0019}O_2$, according to the present embodiment includes the following steps:

step (1), first sintering: sintering a ternary cathode material precursor $Ni_{1-x-y}Co_xAl_y(OH)_{2+y}$, heating to 600 °C and reacting for 6.5 hours;

step (2), second sintering: drying lithium hydroxide monohydrate to completely lose crystal water, and then mixing and grinding with the product obtained by sintering in step (1) and a doping material $TiO_2$, the amount of lithium hydroxide monohydrate being in a molar ratio of Li in the lithium hydroxide monohydrate to (Ni+Co+Al) in the ternary cathode material precursor of 1.035: 1, the amount of $TiO_2$ added being in a molar ratio of Ti in the $TiO_2$ to (Ni+Co+Al) in the ternary cathode material precursor of 0.0019: 0.9981; sintering after uniform grinding, heating to 775 °C, reacting for 8 hours, and then cooling to room temperature at a rate of 0.3 °C/min; and

step (3), third sintering: heating the product obtained by sintering in step (2) to 615 °C, sintering for 5 hours, and cooling to room temperature, thus obtaining a target product $(Li_{1.035}Ni_{0.815}Co_{0.15}Al_{0.035})_{0.9981}Ti_{0.0019}O_2$, The ICP element analysis test shows that the molar percentages of metals Ni, Co, Al and Ti are as follows:

| Element content (Mol%) | | | |
|---|---|---|---|
| Ni | Co | Al | Ti |
| 81.58 | 14.73 | 3.50 | 0.19 |

Embodiment 11

Embodiment 11 provides an Al-doped nickel-cobalt-aluminium ternary lithium ion cathode material $(Li_{1.035}Ni_{0.815}Co_{0.15}Al_{0.035})_{0.9984}Al_{0.0016}O_2$, where M is Al, x=0.15, y=0.035, a=1.035, and b=0.016. A preparation method of the Al-doped nickel-cobalt-aluminium ternary lithium ion cathode material $(Li_{1.035}Ni_{0.815}Co_{0.15}Al_{0.035})_{0.9984}Al_{0.0016}O_2$, according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing and grinding with the product obtained by sintering in step (1) and a doping material $Al_2O_3$, the amount of lithium hydroxide monohydrate being in a molar ratio of Li in the lithium hydroxide monohydrate to (Ni+Co+Al) in the ternary cathode material precursor of 1.035: 1, the amount of $Al_2O_3$ added being in a molar ratio of Al in the $Al_2O_3$ to (Ni+Co+Al) in the ternary cathode material precursor of 0.0016: 0.9984; sintering after uniform grinding, heating to 715 °C, reacting for 16.5 hours, and then cooling to room temperature at a rate of 0.3 °C/min; and

step (3), third sintering: heating the product obtained by sintering in step (2) to 650 °C, sintering for 3.5 hours, and cooling to room temperature, thus obtaining a target product $(Li_{1.035}Ni_{0.815}Co_{0.15}Al_{0.035})_{0.9984}Al_{0.0016}O_2$, The ICP element analysis test shows that the molar percentages of metals Ni, Co and Al are as follows:

| Element content (Mol%) | | |
|---|---|---|
| Ni | Co | Al |
| 81.61 | 14.73 | 3.66 |

Embodiment 12

Embodiment 12 provides an Al-doped nickel-cobalt-aluminium ternary lithium ion cathode material $(Li_{1.035}Ni_{0.815}Co_{0.15}Al_{0.035})_{0.997}Al_{0.003}O_2$, where M is Al, x=0.15, y=0.035, a=1.035, and b=0.003. A preparation method of the Al-doped nickel-cobalt-aluminium ternary lithium ion cathode material $(Li_{1.035}Ni_{0.815}Co_{0.15}Al_{0.035})_{0.997}Al_{0.003}O_2$, according to the present embodiment includes the following steps:

step (1), first sintering: sintering a ternary cathode material precursor $Ni_{1-x-y}Co_xAl_y(OH)_{2+y}$, heating to 600 °C and reacting for 6.5 hours;

step (2), second sintering: drying lithium hydroxide monohydrate to completely lose crystal water, and then mixing and grinding with the product obtained by sintering in step (1) and a doping material $Al_2O_3$, the amount of lithium hydroxide monohydrate being in a molar ratio of Li in the lithium hydroxide monohydrate to (Ni+Co+Al) in the ternary cathode material precursor of 1.035: 1, the amount of $Al_2O_3$ added being in a molar ratio of Al in the $Al_2O_3$ to (Ni+Co+Al) in the ternary cathode material precursor of 0.003: 0.997; sintering after uniform grinding, heating to 775 °C, sintering for 8 hours, and then cooling to room temperature at a rate of 0.3 °C/min; and

step (3), third sintering: heating the product obtained by sintering in step (2) to 615 °C, sintering for 5 hours, and cooling to room temperature, thus obtaining a target product $(Li_{1.035}Ni_{0.815}Co_{0.15}Al_{0.035})_{0.997}Al_{0.003}O_2$, The ICP element analysis test shows that the molar percentages of metals Ni, Co and Al are as follows:

| Element content (Mol%) | | |
|---|---|---|
| Ni | Co | Al |
| 81.49 | 14.71 | 3.80 |

Embodiment 13

Embodiment 13 provides an Mg-doped nickel-cobalt-aluminium ternary lithium ion cathode material $(Li_{1.035}Ni_{0.815}Co_{0.15}Al_{0.035})_{0.9983}Al_{0.0017}O_2$, where M is Mg, x=0.15, y=0.035, a=1.035, and b=0.0017. A preparation method of the Mg-doped nickel-cobalt-aluminium ternary lithium ion cathode material $(Li_{1.035}Ni_{0.815}Co_{0.15}Al_{0.035})_{0.9983}Mg_{0.0017}O_2$, according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing and grinding with the product obtained by sintering in step (1) and a doping material MgO, the amount of lithium hydroxide monohydrate being in a molar ratio of Li in the lithium hydroxide monohydrate to (Ni+Co+Al) in the ternary cathode material precursor of 1.035: 1, the amount of MgO added being in a molar ratio of Mg in the MgO to (Ni+Co+Al) in the ternary cathode material precursor of 0.0017: 0.9983; sintering after uniform grinding, heating to 715 °C, reacting for 16.5 hours, and then cooling to room temperature at a rate of 0.3 °C/min; and

step (3), third sintering: heating the product obtained by sintering in step (2) to 650 °C, sintering for 3.5 hours, and cooling to room temperature, thus obtaining a target product $(Li_{1.035}Ni_{0.815}Co_{0.15}Al_{0.035})_{0.9983}Mg_{0.0017}O_2$. The ICP element analysis test shows that the molar percentages of metals Ni, Co, Al and Mg are as follows:

| Element content (Mol%) | | | |
|---|---|---|---|
| Ni | Co | Al | Mg |
| 81.59 | 14.73 | 3.50 | 0.18 |

Embodiment 14

Embodiment 14 provides an Mg-doped nickel-cobalt-aluminium ternary lithium ion cathode material $(Li_{1.035}Ni_{0.815}Co_{0.15}Al_{0.035})_{0.9975}Mg_{0.0025}O_2$. where M is Mg, x=0.15, y=0.035, a=1.035, and b=0.0025. A preparation method of the Mg-doped nickel-cobalt-aluminium ternary lithium ion cathode material $(Li_{1.035}Ni_{0.815}Co_{0.15}Al_{0.035})_{0.9975}Mg_{0.0025}O_2$. according to the present embodiment includes the following steps:

step (1), first sintering: sintering a ternary cathode material precursor $Ni_{1-x-y}Co_xAl_y(OH)_{2+y}$, heating to 600 °C and reacting for 6.5 hours;

step (2), second sintering: drying lithium hydroxide monohydrate to completely lose crystal water, and then mixing and grinding with the product obtained by sintering in step (1) and a doping material MgO, the amount of lithium hydroxide monohydrate being in a molar ratio of Li in the lithium hydroxide monohydrate to (Ni+Co+Al) in the ternary cathode material precursor of 1.035: 1, the amount of MgO added being in a molar ratio of Mg in the MgO to (Ni+Co+Al) in the ternary cathode material precursor of 0.0025: 0.9975; sintering after uniform grinding, heating to 775 °C, sintering for 8 hours, and then cooling to room temperature at a rate of 0.3 °C/min; and

step (3), third sintering: heating the product obtained by sintering in step (2) to 615 °C, sintering for 5 hours, and cooling to room temperature, thus obtaining a target product $(Li_{1.035}Ni_{0.815}Co_{0.15}Al_{0.035})_{0.9975}Mg_{0.0025}O_2$. The ICP element analysis test shows that the molar percentages of metals Ni, Co, Al and Mg are as follows:

| Element content (Mol%) | | | |
|---|---|---|---|
| Ni | Co | Al | Mg |
| 81.53 | 14.72 | 3.50 | 0.25 |

Embodiment 15

The present embodiment provides a Ti-doped and coating material $ZrO_2$-coated nickel-cobalt-aluminium ternary lithium ion battery cathode material, the chemical formula of which is $(Li_{1.035}Ni_{0.815}Co_{0.15}Al_{0.035})_{0.9982}Ti_{0.0007}Zr_{0.0011}O_2$, where M is Ti, M' is Zr, x=0.15, y=0.035, a=1.035, b1=0.0007, and b2=0.0011.

A preparation method of the doped and coated nickel-cobalt-aluminium ternary lithium ion battery cathode material $(Li_{1.035}Ni_{0.815}Co_{0.15}Al_{0.035})_{0.9982}Ti_{0.0007}Zr_{0.0011}O_2$, according to the present embodiment includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing with the product obtained by sintering in step (1) and a doping material $TiO_2$, the amount of lithium hydroxide monohydrate being in a molar ratio of Li in the lithium hydroxide monohydrate to (Ni+Co+Al) in the ternary cathode material precursor of 1.035: 1, the amount of the doping material $TiO_2$ added being in a molar ratio of Ti in the $TiO_2$ to (Ni+Co+Al) in the ternary cathode material precursor of 0.0007: 0.9982; sintering in oxygen after uniform mixing and grinding, heating to 715 °C, reacting for 16.5 hours, and then cooling to room temperature at a rate of 0.3 °C/min; and

step (3), third sintering: adding a coating material $ZrO_2$ to the product obtained by sintering in step (2), the amount of $ZrO_2$ added being in a molar ratio of Zr in the $ZrO_2$ to (Ni+Co+Al) in the ternary cathode material precursor of 0.0011: 0.9982; heating to 650 °C, sintering for 3.5 hours, and cooling to room temperature, thus obtaining a target product $(Li_{1.035}Ni_{0.815}Co_{0.15}Al_{0.035})_{0.9982}Ti_{0.0007}Zr_{0.0011}O_2$, The ICP element analysis test shows that the molar percentages of metals Ni, Co, Al, Zr and Ti are as follows:

| Element content (Mol%) | | | | |
|---|---|---|---|---|
| Ni | Co | Al | Zr | Ti |
| 81.59 | 14.73 | 3.5 | 0.11 | 0.07 |

Embodiment 16

Embodiment 16 provides a preparation method of a nickel-cobalt-aluminium ternary lithium ion battery cathode material $Li_{1.035}Ni_{0.815}Co_{0.15}Al_{0.035}O_2$, including the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 715 °C, reacting for 16.5 hours, and then cooling to room temperature at a rate of 0.3 °C/min; and

step (3), third sintering: heating the product obtained by sintering in step (2) to 650 °C, sintering for 3.5 hours, cooling to room temperature, and then flushing with carbon dioxide gas stream; and

step (4), fourth sintering: heating the product washed in step (3) to 250 °C, sintering for 3 hours, and cooling to room temperature, thus obtaining a target product.

Embodiment 17

Embodiment 17 provides a preparation method of a nickel-cobalt-aluminium ternary lithium ion battery cathode material $Li_{1.035}Ni_{0.815}Co_{0.15}Al_{0.035}O_2$, including the following steps:

step (1), first sintering: sintering a ternary cathode material precursor $Ni_{0.815}Co_{0.15}Al_{0.035}(OH)_{2.035}$, heating to 600 °C and reacting for 6.5 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 775 °C, reacting for 8 hours, and then cooling to room temperature at a rate of 0.3 °C/min;

step (3), third sintering: heating the product obtained by sintering in step (2) to 615 °C, sintering for 5 hours, cooling to room temperature, and then flushing with carbonated water; and

step (4), fourth sintering: heating the product washed in step (3) to 350 °C, sintering for 5 hours, and cooling to room temperature, thus obtaining a target product.

Embodiment 18

Embodiment 18 provides a Zr-doped nickel-cobalt-aluminium ternary lithium ion cathode material $(Li_{1.035}Ni_{0.815}Co_{0.15}Al_{0.035})_{0.9975}Zr_{0.0025}O_2$, where M is Zr, x=0.15, y=0.035, a=1.035, and b=0.0025. A preparation method of the Zr-doped nickel-cobalt-aluminium ternary lithium ion battery cathode material according to the present embodiment includes the following steps:

step (1), first sintering: mixing and sintering a ternary cathode material precursor $Ni_{1-x-y}Co_xAl_y(OH)_{2+y}$ and a doping material $ZrO_2$, the amount of $ZrO_2$ added being in a molar ratio of Zr in the $ZrO_2$ to (Ni+Co+Al) in the ternary cathode material precursor of 0.0025: 0.9975; heating to 600 °C and reacting for 6.5 hours;

step (2), second sintering: drying lithium hydroxide monohydrate to completely lose crystal water, and then mixing and grinding with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; grinding uniformly, then sintering, heating to 775 °C, reacting for 8 hours, and then cooling to room temperature at a rate of 0.3 °C/min; and

step (3), third sintering: heating the product obtained by sintering in step (2) to 615 °C, sintering for 5 hours, and cooling to room temperature, thus obtaining a target product $(Li_{1.035}Ni_{0.815}Co_{0.15}Al_{0.035})_{0.9975}Zr_{0.0025}O_2$.

Embodiment 19

Embodiment 19 provides an Nb-doped nickel-cobalt-aluminium ternary lithium ion cathode material $(Li_{1.035}Ni_{0.815}Co_{0.15}Al_{0.035})_{0.9975}Nb_{0.0025}O_2$, where M is Nb, x=0.15, y=0.035, a=1.035, and b=0.0025. A preparation method of the Nb-doped nickel-cobalt-aluminium ternary lithium ion cathode material according to the present embodiment includes the following steps:

step (1), first sintering: mixing and sintering a ternary cathode material precursor $Ni_{1-x-y}Co_xAl_y(OH)_{2+y}$ and a doping material $Nb(OH)_5$, the amount of $Nb(OH)_5$ added being in a molar ratio of Nb in the $Nb(OH)_5$ to (Ni+Co+Al) in the ternary cathode material precursor of 0.0012: 0.9975; heating to 600 °C and reacting for 6.5 hours;

step (2), second sintering: drying lithium hydroxide monohydrate to completely lose crystal water, and then mixing and grinding with the product obtained by sintering in step (1) and the doping material $Nb(OH)_5$, the amount of $Nb(OH)_5$ added being in a molar ratio of Nb in the Nb(OH)5 to (Ni+Co+Al) in the ternary cathode material precursor of 0.0013: 0.9975, the amount of lithium hydroxide monohydrate being in a molar ratio of Li in the lithium hydroxide monohydrate to (Ni+Co+Al) in the ternary cathode material precursor of 1.035: 1; sintering after uniform grinding, heating to 775 °C, sintering for 8 hours, and then cooling to room temperature at a rate of 0.3 °C/min; and

step (3), third sintering: heating the product obtained by sintering in step (2) to 615 °C, sintering for 5 hours, and cooling to room temperature, thus obtaining a target product $(Li_{1.035}Ni_{0.815}Co_{0.15}Al_{0.035})_{0.9975}Nb_{0.0025}O_2$.

Embodiment 20

The present embodiment provides a Ce-doped and coating material $ZrO_2$-coated nickel-cobalt-aluminium ternary lithium ion battery cathode material, the chemical formula of which is $(Li_{1.035}Ni_{0.815}Co_{0.15}Al_{0.035})_{0.9982}Ce_{0.0007}Zr_{0.0011}O_2$, where M is Ce, M' is Zr, x=0.15, y=0.035, a=1.035, b1=0.0007, and b2=0.0011.

A preparation method of the doped and coated nickel-cobalt-aluminium ternary lithium ion battery cathode material according to the present embodiment includes the following steps:

step (1), first sintering: mixing a ternary cathode material precursor $Ni_{1-x-y}Co_xAl_y(OH)_{2+y}$ with a doping material $CeO_2$, the amount of the doping material $CeO_2$ added being in a molar ratio of Ce in the $CeO_2$ to (Ni+Co+Al) in the ternary cathode material precursor of 0.0007: 0.9982; heating to 500 °C and reacting for 10 hours;

step (2), second sintering: drying lithium hydroxide monohydrate to completely lose crystal water, and then mixing and sintering with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 715 °C, reacting for 16.5 hours, and then cooling to room temperature at a rate of 0.3 °C/min; and

step (3), third sintering: adding a coating material $ZrO_2$ to the product obtained by sintering in step (2), the amount of $ZrO_2$ added being in a molar ratio of Zr in the $ZrO_2$ to (Ni+Co+Al) in the ternary cathode material precursor of 0.0011: 0.9982; heating to 650 °C, sintering for 3.5 hours, and cooling to room temperature, thus obtaining a target product $(Li_{1.035}Ni_{0.815}Co_{0.15}Al_{0.035})_{0.9982}Ce_{0.0007}Zr_{0.0011}O_2$,

Embodiment 21

The present embodiment provides an Nb-doped and coating material $ZrO_2$-coated nickel-cobalt-aluminium ternary lithium ion battery cathode material, the chemical formula of which is $(Li_{1.035}Ni_{0.815}Co_{0.15}Al_{0.035})_{0.9982}Nb_{0.0007}Zr_{0.0011}O_2$, where M is Nb, M' is Zr, x=0.15, y=0.035, a=1.035, b1=0.0007, and b2=0.0011.

A preparation method of the doped and coated nickel-cobalt-aluminium ternary lithium ion battery cathode material according to the present embodiment includes the following steps:

step (1), first sintering: sintering a ternary cathode material precursor $Ni_{1-x-y}Co_xAl_y(OH)_{2+y}$, and mixing with a doping material $Nb(OH)_5$, the amount of the doping material $Nb(OH)_5$ added being in a molar ratio of Nb in the $Nb(OH)_5$ to (Ni+Co+Al) in the ternary cathode material precursor of 0.0003: 0.9982; heating to 500 °C and reacting for 10 hours;

step (2), second sintering: drying lithium hydroxide monohydrate to completely lose crystal water, and then mixing with the product obtained by sintering in step (1) and the doping material $Nb(OH)_5$, the amount of lithium hydroxide monohydrate being in a molar ratio of Li in the lithium hydroxide monohydrate to (Ni+Co+Al) in the ternary cathode material precursor of 1.035: 1, the amount of the doping material $Nb(OH)_5$ added being in a molar ratio of Nb in the $Nb(OH)_5$ to (Ni+Co+Al) in the ternary cathode material precursor of 0.0004: 0.9982; sintering in oxygen after uniform mixing and grinding, heating to 715 °C, reacting for 16.5 hours, and then cooling to room temperature at a rate of 0.3 °C/min; and

step (3), third sintering: adding a coating material ZrO2 to the product obtained by sintering in step (2), the amount of $ZrO_2$ added being in a molar ratio of Zr in the $ZrO_2$ to (Ni+Co+Al) in the ternary cathode material precursor of 0.0011: 0.9982; heating to 650 °C, sintering for 3.5 hours, and cooling to room temperature, thus obtaining a target product $(Li_{1.035}Ni_{0.815}Co_{0.15}Al_{0.035})_{0.9982}Nb_{0.0007}Zr_{0.0011}O_2$,

Comparative Example 1

Comparative Example 1 provides an undoped and uncoated nickel-cobalt-aluminium ternary lithium ion battery cathode material having a chemical formula $Li_{1.035}Ni_{0.815}Co_{0.15}Al_{0.035}O_2$. A preparation method of the uncoated nickel-cobalt-aluminium ternary lithium ion battery cathode material $Li_{1.035}Ni_{0.815}Co_{0.15}Al_{0.035}O_2$ according to Comparative Example 1 includes the following steps:

step (1), first sintering: sintering a ternary cathode material precursor $Ni_{1-x-y}Co_xAl_y(OH)_{2+y}$, heating to 500 °C and reacting for 10 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1; sintering in oxygen after uniform mixing and grinding, heating to 715 °C, reacting for 16.5 hours, and then cooling to room temperature at a rate of 0.3 °C/min; and

step (3), third sintering: heating the product obtained by sintering in step (2) to 650 °C, sintering for 3.5 hours, and cooling to room temperature, thus obtaining a comparative material $Li_{1.035}Ni_{0.815}Co_{0.15}Al_{0.035}O_2$.

Comparative Example 2

Comparative Example 2 provides an undoped and uncoated nickel-cobalt-aluminium ternary lithium ion battery cathode material having a chemical formula $Li_{1.035}Ni_{0.815}Co_{0.15}Al_{0.035}O_2$. A preparation method of the uncoated nickel-cobalt-aluminium ternary lithium ion battery cathode material $Li_{1.035}Ni_{0.815}Co_{0.15}Al_{0.035}O_2$ according to Comparative Example 2 includes the following steps:

step (1), first sintering: sintering a ternary cathode material precursor $Ni_{0.815}Co_{0.15}Al_{0.035}(OH)_{2.035}$, heating to 600 °C and reacting for 6.5 hours;

step (2), second sintering: drying lithium hydroxide monohydrate to completely lose crystal water, and then mixing with the product obtained by sintering in step (1), the amount of lithium hydroxide monohydrate being in a molar ratio of Li in the lithium hydroxide monohydrate to (Ni+Co+Al) in the ternary cathode material precursor of 1.035: 1;

sintering in oxygen after uniform mixing and grinding, heating to 775 °C, reacting for 8 hours, and then cooling to room temperature at a rate of 0.3 °C/min; and

step (3), third sintering: heating the product obtained by sintering in step (2) to 615 °C, sintering for 5 hours, and cooling to room temperature, thus obtaining a comparative material $Li_{1.035}Ni_{0.815}Co_{0.15}Al_{0.035}O_2$.

Table 1: Reaction conditions, raw material ratios and products of respective steps in Embodiments 1-17 and Comparative Examples 1 and 2.

| Embodiment/ Comparative Example | Step (1) sintering temperature (°C) | Step (1) sintering time (h) | Step (2) sintering temperature (°C) | Step (2) sintering time (h) | Step (2) cooling rate (°C/min) | a | Step (2) doping material | Step (3) coating material | b | Step (3) sintering temperature (°C) | Step (3) sintering time (h) | Step (3) washing method | Step (4) sintering temperature (°C) | Step (4) sintering time (h) | Product $(Li_aNi_{1-y}Co_yAl_z)_{1-b}M_bO_2$ |
|---|---|---|---|---|---|---|---|---|---|---|---|---|---|---|---|
| Embodiment 1 | 500 | 10 | 715 | 16.5 | 0.3 | 1.035 | —— | $ZrO_2$ | 0.0016 | 650 | 3.5 | —— | —— | —— | $(Li_{1.035}Ni_{0.815}Co_{0.15}Al_{0.035})_{0.9984}Zr_{0.0016}O_2$ |
| Embodiment 2 | 600 | 6.5 | 775 | 8 | 0.3 | 1.035 | —— | $ZrO_2$ | 0.0008 | 615 | 5 | —— | —— | —— | $(Li_{1.035}Ni_{0.815}Co_{0.15}Al_{0.035})_{0.9992}Zr_{0.0008}O_2$ |
| Embodiment 3 | 500 | 10 | 715 | 16.5 | 0.3 | 1.035 | —— | $Al_2O_3$ | 0.002 | 650 | 3.5 | —— | —— | —— | $(Li_{1.035}Ni_{0.815}Co_{0.15}Al_{0.035})_{0.998}Al_{0.002}O_2$ |
| Embodiment 4 | 600 | 6.5 | 775 | 8 | 0.3 | 1.035 | —— | $Al_2O_3$ | 0.0055 | 615 | 5 | —— | —— | —— | $(Li_{1.035}Ni_{0.815}Co_{0.15}Al_{0.035})_{0.9945}Al_{0.0055}O_2$ |
| Embodiment 5 | 500 | 10 | 715 | 16.5 | 0.3 | 1.035 | —— | $ZnO$ | 0.0029 | 650 | 3.5 | —— | —— | —— | $(Li_{1.035}Ni_{0.815}Co_{0.15}Al_{0.035})_{0.9971}Zn_{0.0029}O_2$ |
| Embodiment 6 | 600 | 6.5 | 775 | 8 | 0.3 | 1.035 | —— | $ZnO$ | 0.0007 | 615 | 5 | —— | —— | —— | $(Li_{1.035}Ni_{0.815}Co_{0.15}Al_{0.035})_{0.9993}Zn_{0.0007}O_2$ |
| Embodiment 7 | 500 | 10 | 715 | 16.5 | 0.3 | 1.035 | —— | $MgO$ | 0.0078 | 650 | 3.5 | —— | —— | —— | $(Li_{1.035}Ni_{0.815}Co_{0.15}Al_{0.035})_{0.9922}Mg_{0.0078}O_2$ |
| Embodiment 8 | 600 | 6.5 | 775 | 8 | 0.3 | 1.035 | —— | $MgO$ | 0.0017 | 615 | 5 | —— | —— | —— | $(Li_{1.035}Ni_{0.815}Co_{0.15}Al_{0.035})_{0.9983}Mg_{0.0017}O_2$ |
| Embodiment 9 | 500 | 10 | 715 | 16.5 | 0.3 | 1.035 | $TiO_2$ | —— | 0.0007 | 650 | 3.5 | —— | —— | —— | $(Li_{1.035}Ni_{0.815}Co_{0.15}Al_{0.035})_{0.9993}Ti_{0.0007}O_2$ |
| Embodiment 10 | 600 | 6.5 | 775 | 8 | 0.3 | 1.035 | $TiO_2$ | —— | 0.0019 | 615 | 5 | —— | —— | —— | $(Li_{1.035}Ni_{0.815}Co_{0.15}Al_{0.035})_{0.9981}Ti_{0.0019}O_2$ |
| Embodiment 11 | 500 | 10 | 715 | 16.5 | 0.3 | 1.035 | $Al_2O_3$ | —— | 0.0016 | 650 | 3.5 | —— | —— | —— | $(Li_{1.035}Ni_{0.815}Co_{0.15}Al_{0.035})_{0.9984}Al_{0.0016}O_2$ |
| Embodiment 12 | 600 | 6.5 | 775 | 8 | 0.3 | 1.035 | $Al_2O_3$ | —— | 0.003 | 615 | 5 | —— | —— | —— | $(Li_{1.035}Ni_{0.815}Co_{0.15}Al_{0.035})_{0.997}Al_{0.003}O_2$ |
| Embodiment 13 | 500 | 10 | 715 | 16.5 | 0.3 | 1.035 | $MgO$ | —— | 0.0017 | 650 | 3.5 | —— | —— | —— | $(Li_{1.035}Ni_{0.815}Co_{0.15}Al_{0.035})_{0.9983}Mg_{0.0017}O_2$ |
| Embodiment 14 | 600 | 6.5 | 775 | 8 | 0.3 | 1.035 | $MgO$ | —— | 0.0025 | 615 | 5 | —— | —— | —— | $(Li_{1.035}Ni_{0.815}Co_{0.15}Al_{0.035})_{0.9975}Mg_{0.0025}O_2$ |
| Embodiment 15 | 500 | 10 | 715 | 16.5 | 0.3 | 1.035 | $TiO_2$ | $ZrO_2$ | b1=0.0007; b2=0.0011 | 650 | 3.5 | —— | —— | —— | $(Li_{1.035}Ni_{0.815}Co_{0.15}Al_{0.035})_{0.9982}Ti_{0.0007}Zr_{0.0011}O_2$ |
| Embodiment 16 | 500 | 10 | 715 | 16.5 | 0.3 | 1.035 | —— | —— | —— | 650 | 3.5 | Carbon dioxide gas stream washing | 250 | 3 | $Li_{1.035}Ni_{0.815}Co_{0.15}Al_{0.035}O_2$ |
| Embodiment 17 | 600 | 6.5 | 775 | 8 | 0.3 | 1.035 | —— | —— | —— | 615 | 5 | Carbonated water washing | 350 | 5 | $Li_{1.035}Ni_{0.815}Co_{0.15}Al_{0.035}O_2$ |
| Embodiment 14 | 600 | 6.5 | 775 | 8 | 0.3 | 1.035 | $ZrO_2$ | —— | 0.0025 | 615 | 5 | —— | —— | —— | $(Li_{1.035}Ni_{0.815}Co_{0.15}Al_{0.035})_{0.9975}Zr_{0.0025}O_2$ |
| Embodiment 14 | 600 | 6.5 | 775 | 8 | 0.3 | 1.035 | $Nb(OH)_5$ | —— | 0.0025 | 615 | 5 | —— | —— | —— | $(Li_{1.035}Ni_{0.815}Co_{0.15}Al_{0.035})_{0.9975}Nb_{0.0025}O_2$ |
| Embodiment 20 | 500 | 10 | 715 | 16.5 | 0.3 | 1.035 | $CeO_2$ | $ZrO_2$ | b1=0.0007; b2=0.0011 | 650 | 3.5 | —— | —— | —— | $(Li_{1.035}Ni_{0.815}Co_{0.15}Al_{0.035})_{0.9982}Ce_{0.0007}Zr_{0.0011}O_2$ |
| Embodiment 21 | 500 | 10 | 715 | 16.5 | 0.3 | 1.035 | $Nb(OH)_5$ | $ZrO_2$ | b1=0.0007; b2=0.0011 | 650 | 3.5 | —— | —— | —— | $(Li_{1.035}Ni_{0.815}Co_{0.15}Al_{0.035})_{0.9982}Nb_{0.0007}Zr_{0.0011}O_2$ |
| Comparative Example 1 | 500 | 10 | 715 | 16.5 | 0.3 | 1.035 | —— | —— | —— | 650 | 3.5 | —— | —— | —— | $Li_{1.035}Ni_{0.815}Co_{0.15}Al_{0.035}O_2$ |
| Comparative Example 2 | 600 | 6.5 | 775 | 8 | 0.3 | 1.035 | —— | —— | —— | 615 | 5 | —— | —— | —— | $Li_{1.035}Ni_{0.815}Co_{0.15}Al_{0.035}O_2$ |

Assembly of button battery

Assembly of CR2032 type button battery:

The coated lithium nickel cobalt aluminate ternary cathode material prepared in each of Embodiments 1-8 or the uncoated nickel-cobalt-aluminium ternary cathode material prepared in Comparative Example 1 or 2 is used as an active material of the cathode, a metal lithium sheet is used as the anode, the separator is Celgard 2500 separator, the electrolyte solution is fosai LB-002 electrolyte solution of Suzhou Fosai New Materials Co., Ltd., and the CR2032 type button battery is assembled according to a method in the prior art. The assembly sequence is: placing a cathode cover flat, placing a spring piece, a stainless steel sheet and a cathode plate, injecting an electrolyte solution, placing a separator and a lithium sheet, covering with an anode cap, and sealing. The battery is assembled in a dry glove box filled with argon. After the assembly, the performance of each of the batteries is tested, and the test results are shown in Table 2.

1. ICP element detection

Test method: Inductively coupled plasma mass spectrometry
Test instrument: Inductively coupled plasma mass spectrometer
Model: Prodigy DC Arc
Test instrument manufacturer: LEEMAN LABS INC.

2. Cycle performance

Test instrument: Neware battery detection system, Model: BTS-5V10mA
Test instrument manufacturer: Shenzhen Neware Electronics Co., Ltd.;
Test method: At 25 °C, charge the battery to 4.3 V at a current rate of 1 C, keep the 4.3 V constant voltage until the current rate is 0.05 C, then discharge the battery to 3 V at a current rate of 1 C, repeated 100 times of the charge and discharge cycle, measure the discharge capacity at the first cycle and the $100^{th}$ cycle, and calculate the capacity retention ratio after 100 cycles based on a formula: capacity retention ratio after the cycle=(discharge capacity at the $100^{th}$ cycle) / (discharge capacity at the first cycle) *100%.

3. Tap density

Test instrument: Tapping apparatus
Instrument model: JZ-1
Instrument manufacturer: Chengdu Jingxin Powder Test Equipment Co., Ltd.
Test method: Weigh about 10 to 20 g of cathode material with an accuracy of 0.0001 g. Place the cathode material into a measuring cylinder, and then fix the measuring cylinder to a holder. Tap the cathode material 3,000 times repeatedly (i.e., automatically lift and drop the measuring cylinder), and then measure the corresponding volume. Tap density=mass after tapping/ volume after tapping. Three parallel experiments were performed, and the results listed in Table 2 represent the average of the three experiments.

4. Surface alkali residue test method: Acid-base titration.

(1) Prepare a clear solution of the cathode material: Weigh $W_1$ (30.0000±0.0040 g) cathode material with an accuracy of 0.0001 g, weigh $W_2$ (100±0.1 g) deionized water with an accuracy of 0.01 g, mix the cathode material with the deionized water, displace the air in the mixed solution with argon, stir, filter to obtain a filtrate, and transfer 50 mL of the filtrate to a 100 mL beaker to prepare for titration.
(2) Measure LiOH content: Use phenolphthalein as an indicator, and titrate with a 0.05 mol/L hydrochloric acid standard solution, where the volume of the hydrochloric acid standard solution consumed at the end point is $V_1$.
(3) Measure $Li_2CO_3$ content: Displace $CO2$ in the clear solution after the titration in step (2) with argon, then use a methyl red indicator, and titrate with the 0.05 mol/L hydrochloric acid standard solution, where the volume of the hydrochloric acid standard solution consumed at the end point is $V_2$.

Formula for calculating surface LiOH content (wt%) of the cathode material:

$$\omega_1=(2V_1-V_2)*0.05*2.395*W_2/W_1/50.$$

Formula for calculating surface $Li_2CO_3$ content (wt%) of the cathode material: $\omega_2=$

$$(V_2-V_1)*0.05*7.389*W_2/W_1/50.$$

2.395: mass of LiOH expressed in g equivalent to the hydrochloric acid standard solution (1.000 mol/L).
7.389: mass of $Li_2CO_3$ expressed in g equivalent to the hydrochloric acid standard solution (2.000 mol/L).
Surface alkali residue of the cathode material = $\omega_1+\omega_2$.

Table 2 Performance test results of Embodiments 1-17 and Comparative Examples 1 and 2

| Embodiment/ Comparative Example | Capacity retention ratio after 100 cycles (%, 1C) | Tap density (g/cm$^3$) | Surface alkali residue (wt%) |
|---|---|---|---|
| Embodiment 1 | 91.50 | - | - |
| Embodiment 2 | 89.70 | - | - |
| Embodiment 3 | 83.20 | 2.97 | 0.35 |
| Embodiment 4 | 82 | 2.96 | 0.41 |
| Embodiment 5 | 87.30 | - | - |
| Embodiment 6 | 85.90 | 2.80 | - |
| Embodiment 7 | 85.80 | - | - |
| Embodiment 8 | 84 | - | - |
| Embodiment 9 | 89.2 | - | 0.74 |
| Embodiment 10 | 84.9 | - | 0.75 |
| Embodiment 11 | 87 | - | 0.66 |
| Embodiment 12 | 82.8 | - | 0.69 |
| Embodiment 13 | 90.7 | - | 0.56 |
| Embodiment 14 | 88.9 | - | 0.59 |
| Embodiment 15 | 91. | - | 0.7 |
| Embodiment 16 | - | - | 0.33 |
| Embodiment 17 | - | - | 0.21 |
| Comparative Example 1 | 79.70 | 2.79 | 0.83 |
| Comparative Example 2 | 76.20 | 2.75 | 0.88 |

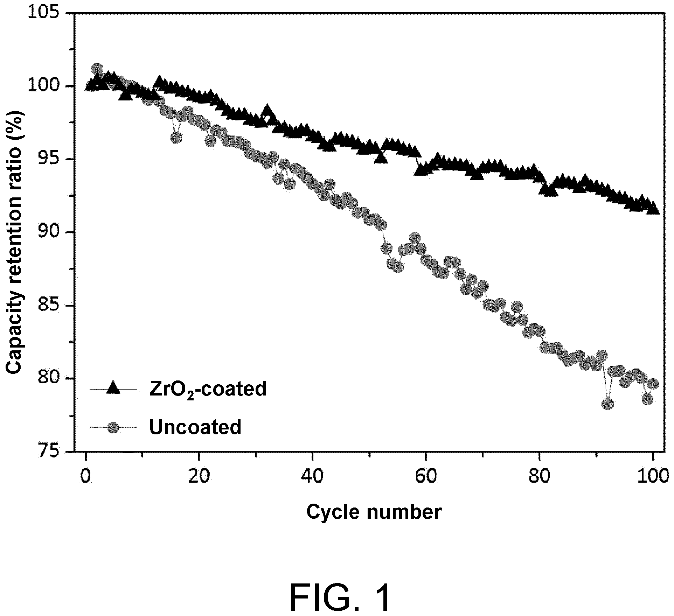

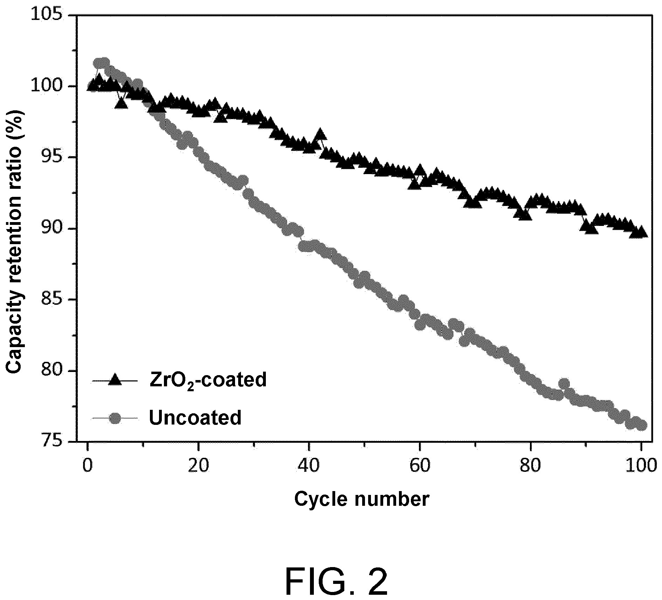

Referring to Fig. 1, it can be seen in combination with the data of Table 2 that the $ZrO_2$-coated nickel-cobalt-aluminium ternary cathode material $(Li_{1.035}Ni_{0.815}Co_{0.15}Al_{0.035})_{0.9984}Zr_{0.0016}O_2$ in Embodiment 1 has a capacity retention ratio of 91.50% after 100 cycles, while the uncoated nickel-cobalt-aluminium ternary cathode material in Comparative Example 1 has a capacity retention ratio of 79.70% after 100 cycles, so compared with the uncoated nickel-cobalt-aluminium ternary cathode material in Comparative Example 1, the $ZrO_2$-coated nickel-cobalt-aluminium ternary cathode material $(Li_{1.035}Ni_{0.815}Co_{0.15}Al_{0.035})_{0.9984}Zr_{0.0016}O_2$ in Embodiment 1 has more stable cycle performance.
Referring to Fig. 2, it can be seen in combination with the data of Table 2 that the $ZrO_2$-coated nickel-cobalt-aluminium ternary cathode material $(Li_{1.035}Ni_{0.815}Co_{0.15}Al_{0.035})_{0.9992}Zr_{0.0008}O_2$ in Embodiment 2 has a capacity retention ratio of 91.50% after 100 cycles, while the uncoated nickel-cobalt-aluminium ternary cathode material in Comparative Example 2 has a capacity retention ratio of 76.20% after 100 cycles, so compared with the uncoated nickel-cobalt-aluminium ternary cathode material in Comparative Example 2, the $ZrO_2$-coated nickel-cobalt-aluminium ternary cathode material $(Li_{1.035}Ni_{0.815}Co_{0.15}Al_{0.035})_{0.9992}Zr_{0.0008}O_2$ in Embodiment 2 has more stable cycle performance.

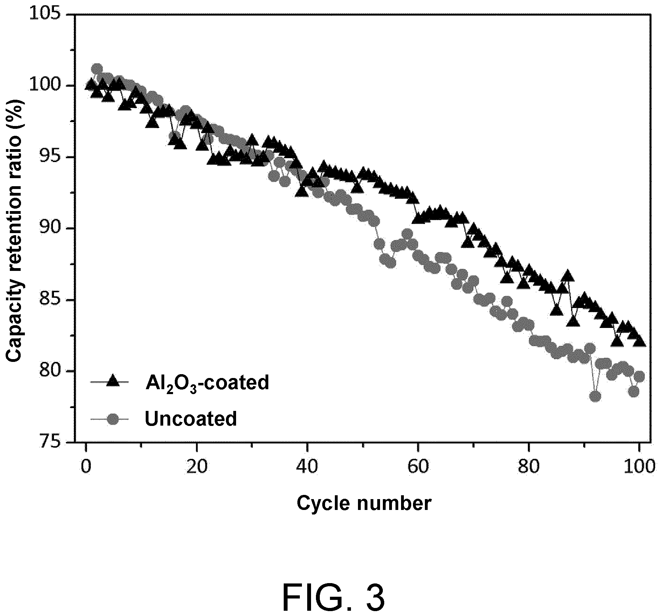

Referring to Fig. 3, it can be seen in combination with the data of Table 2 that the $Al_2O_3$-coated nickel-cobalt-aluminium ternary cathode material $(Li_{1.035}Ni_{0.815}Co_{0.15}Al_{0.035})_{0.998}Al_{0.002}O_2$ in Embodiment 3 has a tap density of 2.97 $g/cm^3$ and a capacity retention ratio of 83.20% after 100 cycles, while the uncoated nickel-cobalt-aluminium ternary cathode material in Comparative Example 1 has a tap density of 2.79 $g/cm^3$ and a capacity retention ratio of 79.70% after 100 cycles, so compared with the uncoated nickel-cobalt-aluminium ternary cathode material in Comparative Example 1, the $Al_2O_3$-coated nickel-cobalt-aluminium ternary cathode material $Co_{0.15}Al_{0.035})_{0.998}Al_{0.002}O_2$ in Embodiment 3 has more stable cycle performance and higher tap density.

The $Al_2O_3$-coated nickel-cobalt-aluminium ternary cathode material $(Li_{1.035}Ni_{0.815}Co_{0.15}Al_{0.035})_{0.998}Al_{0.002}O_2$ in Embodiment 3 has a surface LiOH weight percentage of 0.26%, a surface $Li_2CO_3$ weight percentage of 0.09% and a surface alkali residue weight percentage of 0.35%, while the uncoated nickel-cobalt-aluminium ternary cathode material in Comparative Example 1 has a surface LiOH content of 0.46%, a surface $Li_2CO_3$ weight percentage of 0.37% and a surface alkali residue weight percentage of 0.83%, so compared with the uncoated nickel-cobalt-aluminium ternary cathode material in Comparative Example 1, the $Al_2O_3$-coated nickel-cobalt-aluminium ternary cathode material $Co_{0.15}Al_{0.035})_{0.998}Al_{0.002}O_2$ in Embodiment 3 has a decrease in surface LiOH and $Li_2CO_3$ content, and the surface alkali residue is effectively reduced.

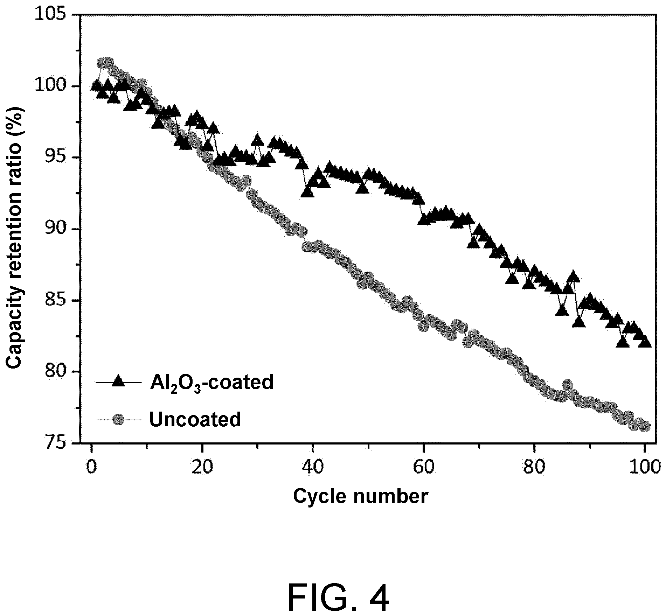

Referring to Fig. 4, it can be seen in combination with the data of Table 2 that the $Al_2O_3$-coated nickel-cobalt-aluminium ternary cathode material $(Li_{1.035}Ni_{0.815}Co_{0.15}Al_{0.035})_{0.9945}Al_{0.0055}O_2$ in Embodiment 4 has a tap density of 2.96 $g/cm^3$ and a capacity retention ratio of 82% after 100 cycles, while the uncoated nickel-cobalt-aluminium ternary cathode material in Comparative Example 2 has a tap density of 2.75 $g/cm^3$ and a capacity retention ratio of 76.20% after 100 cycles, so compared with the uncoated nickel-cobalt-aluminium ternary cathode material in Comparative Example 2, the $Al_2O_3$-coated $(Li_{1.035}Ni_{0.815}Co_{0.15}Al_{0.035})_{0.9945}Al_{0.0055}O_2$ in Embodiment 2 has more stable cycle performance and higher tap density.

The $Al_2O_3$-coated nickel-cobalt-aluminium ternary cathode material $(Li_{1.035}Ni_{0.815}Co_{0.15}Al_{0.035})_{0.9945}Al_{0.0055}O_2$ in Embodiment 4 has a surface LiOH weight percentage of 0.26%, a surface $Li_2CO_3$ weight percentage of 0.15% and a surface alkali residue weight percentage of 0.41%, while the uncoated nickel-cobalt-aluminium ternary cathode material in Comparative Example 2 has a surface LiOH weight percentage of 0.49%, a surface $Li_2CO_3$ weight percentage of 0.39% and a surface alkali residue weight percentage of 0.88%, so compared with the uncoated nickel-cobalt-aluminium ternary cathode material in Comparative Example 2, the $Al_2O_3$-coated nickel-cobalt-aluminium ternary cathode material $(Li_{1.035}Ni_{0.815}Co_{0.15}Al_{0.035})_{0.9945}Al_{0.0055}O_2$ in Embodiment 2 has a decrease in surface LiOH and $Li_2CO_3$ content, and the surface alkali residue is effectively reduced.

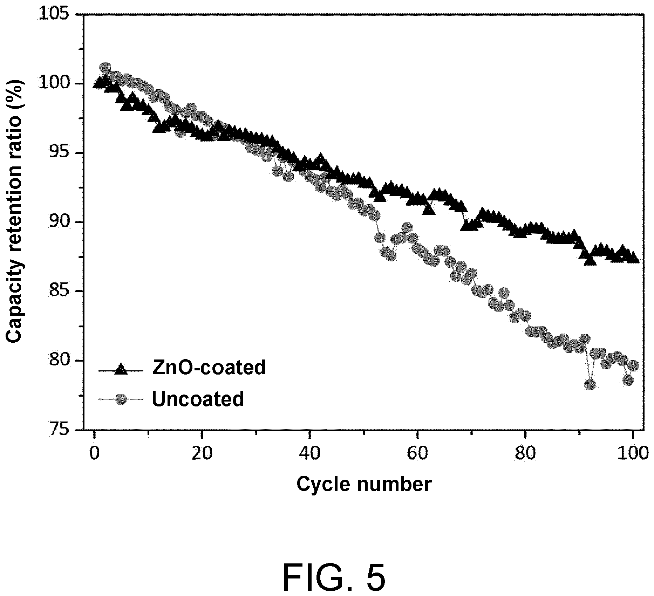

Referring to Fig. 5, it can be seen in combination with the data of Table 2 that the ZnO-coated nickel-cobalt-aluminium ternary cathode material $(Li_{1.035}Ni_{0.815}Co_{0.15}Al_{0.035})_{0.9971}Zn_{0.0029}O_2$ in Embodiment 5 has a capacity retention ratio of 87.30% after 100 cycles, while the uncoated nickel-cobalt-aluminium ternary cathode material in Comparative Example 1 has a capacity retention ratio of 79.70% after 100 cycles, so compared with the uncoated nickel-cobalt-aluminium ternary cathode material in Comparative Example 1, the ZnO-coated nickel-cobalt-aluminium ternary cathode material $(Li_{1.035}Ni_{0.815}Co_{0015}Al_{0.035})_{0.9971}Zn_{0.0029}O_2$ in Embodiment 5 has more stable cycle performance.

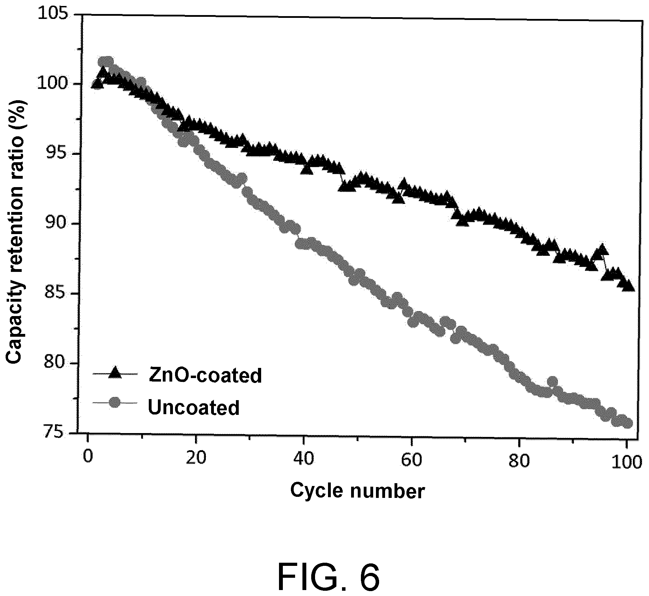

Referring to Fig. 6, it can be seen in combination with the data of Table 2 that the ZnO-coated nickel-cobalt-aluminium ternary cathode material $(Li_{1.035}Ni_{0.815}Co_{0.15}Al_{0.035})_{0.9993}Zn_{0.0007}O_2$ in Embodiment 6 has a capacity retention ratio of 85.90% after 100 cycles, while the uncoated nickel-cobalt-aluminium ternary cathode material in Comparative Example 2 has a capacity retention ratio of 76.20% after 100 cycles, so compared with the uncoated nickel-cobalt-aluminium ternary cathode material in Comparative Example 2, the ZnO-coated nickel-cobalt-aluminium ternary cathode material $(Li_{1.035}Ni_{0.815}Co_{0.15}Al_{0.035})_{0.9993}Zn_{0.0007}O_2$ in Embodiment 2 has more stable cycle performance.

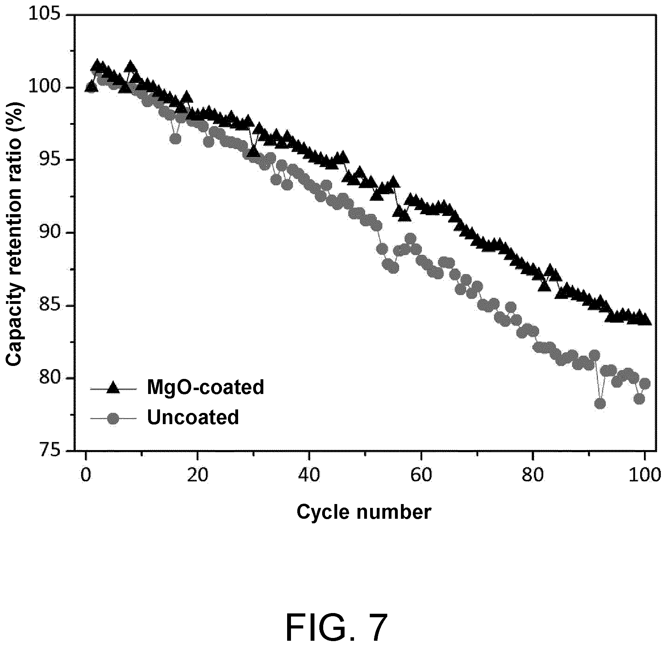

Referring to Fig. 7, it can be seen in combination with the data of Table 2 that the MgO-coated nickel-cobalt-aluminium ternary cathode material $(Li_{1.035}Ni_{0.815}Co_{0.15}Al_{0.035})_{0.9922}Mg_{0.0078}O_2$ in Embodiment 7 has a capacity retention ratio of 85.80% after 100 cycles, while the uncoated nickel-cobalt-aluminium ternary cathode material in Comparative Example 1 has a capacity retention ratio of 79.70% after 100 cycles, so compared with the uncoated nickel-cobalt-aluminium ternary cathode material in Comparative Example 1, the MgO-coated nickel-cobalt-aluminium ternary cathode material $(Li_{1.035}Ni_{0.815}Co_{0.15}Al_{0.035})_{0.9922}Mg_{0.0078}O_2$ in Embodiment 7 has more stable cycle performance.

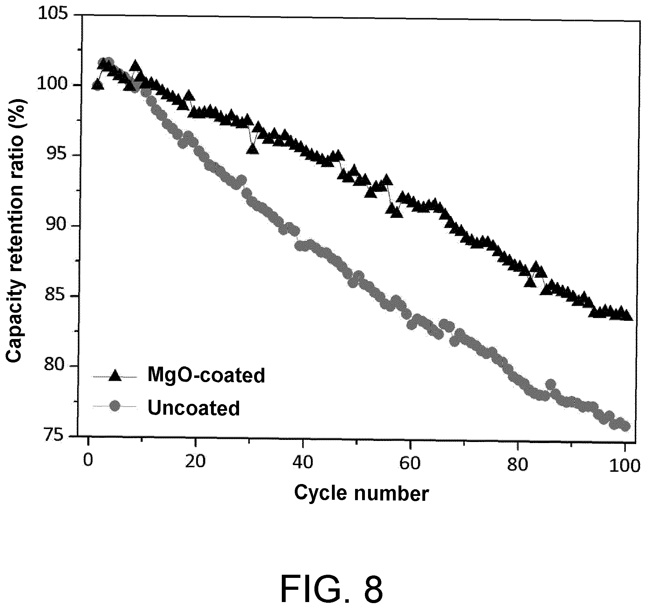

Referring to Fig. 8, it can be seen in combination with the data of Table 2 that the MgO-coated nickel-cobalt-aluminium ternary cathode material $(Li_{1.035}Ni_{0.815}Co_{0.15}Al_{0.035})_{0.9983}Mg_{0.0017}O_2$ in Embodiment 8 has a capacity retention ratio of 84% after 100 cycles, while the uncoated nickel-cobalt-aluminium ternary cathode material in Comparative Example 2 has a capacity retention ratio of 76.20% after 100 cycles, so compared with the uncoated nickel-cobalt-aluminium ternary cathode material in Comparative Example 2, the MgO-coated nickel-cobalt-aluminium ternary cathode material $(Li_{1.035}Ni_{0.815}Co_{0.15}Al_{0.035})_{0.9983}Mg_{0.0017}O_2$ in Embodiment 2 has more stable cycle performance.

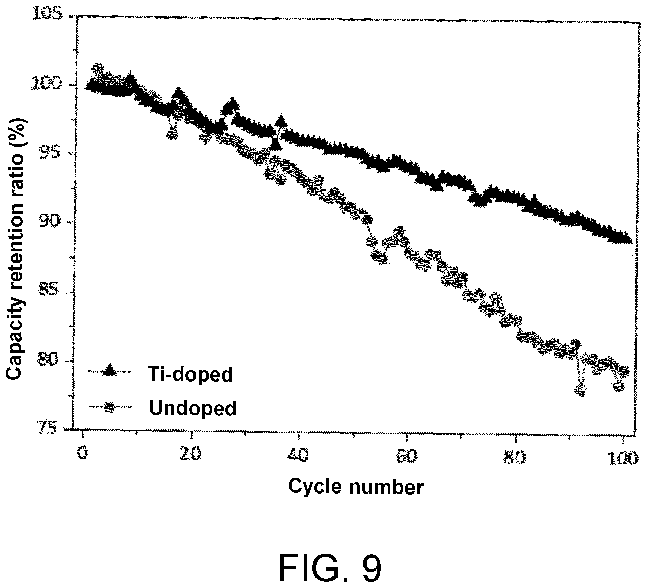

Referring to Fig. 9, it can be seen in combination with the data of Table 2 that the Ti-doped nickel-cobalt-aluminium ternary lithium ion cathode material ($Li_{1.035}Ni_{0.815}Co_{0.15}Al_{0.035})_{0.9993}Ti_{0.0007}O_2$ in Embodiment 9 has a capacity retention ratio of 89.2% after 100 cycles and a total alkali residue weight percentage of 0.74%, while the undoped nickel-cobalt-aluminium ternary lithium ion cathode material in Comparative Example 1 has a capacity retention ratio of 79.7% after 100 cycles and a surface alkali residue weight percentage of 0.83%, so compared with the undoped nickel-cobalt-aluminium ternary lithium ion cathode material in Comparative Example 1, the Ti-doped nickel-cobalt-aluminium ternary lithium ion cathode material in Embodiment 9 has more stable cycle performance and its surface alkali residue is effectively reduced.

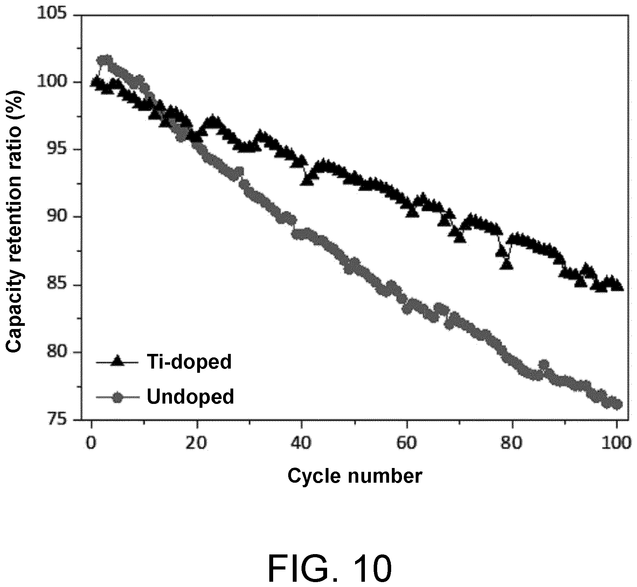

Referring to Fig. 10, it can be seen in combination with the data of Table 2 that the Ti-doped nickel-cobalt-aluminium ternary lithium ion cathode material ($Li_{1.035}Ni_{0.815}Co_{0.15}Al_{0.035})_{0.9981}Ti_{0.0019}O_2$ in Embodiment 10 has a capacity retention ratio of 84.9% after 100 cycles and a total alkali residue weight percentage of 0.75%, while the undoped nickel-cobalt-aluminium ternary lithium ion cathode material in Comparative Example 2 has a capacity retention ratio of 76.2% after 100 cycles and a surface alkali residue weight percentage of 0.88%, so compared with the undoped nickel-cobalt-aluminium ternary lithium ion cathode material in Comparative Example 2, the Ti-doped nickel-cobalt-aluminium ternary lithium ion cathode material ($Li_{1.035}Ni_{0.815}Co_{0.15}Al_{0.035})_{0.9981}Ti_{0.0019}O_2$ in Embodiment 10 has a capacity retention ratio higher than that of the undoped nickel-cobalt-aluminium ternary lithium ion cathode material, has more stable cycle performance and has surface alkali residue lower than that of the undoped nickel-cobalt-aluminium ternary lithium ion cathode material.

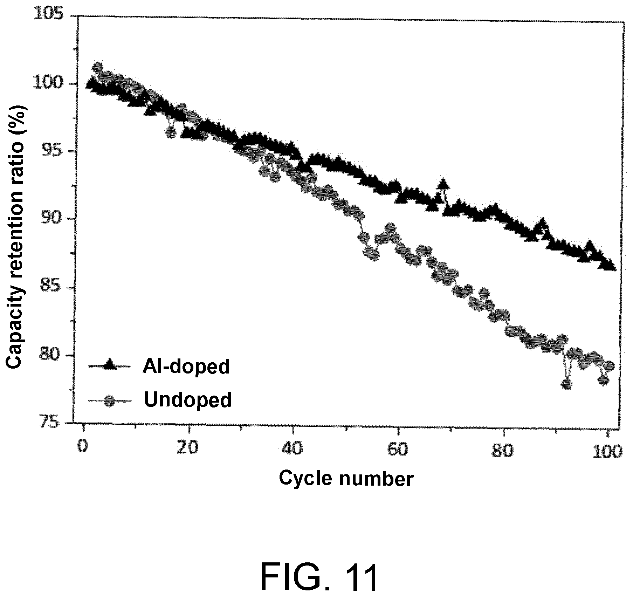

Referring to Fig. 11, it can be seen in combination with the data of Table 2 that the Al-doped nickel-cobalt-aluminium ternary lithium ion cathode material ($Li_{1.035}Ni_{0.815}Co_{0.15}Al_{0.035})_{0.9984}Al_{0.0016}O_2$ in Embodiment 11 has a capacity retention ratio of 87.0% after 100 cycles and a total alkali residue weight percentage of 0.66%, while the undoped nickel-cobalt-aluminium ternary lithium ion cathode material in Comparative Example 1 has a capacity retention ratio of 79.70% after 100 cycles and a surface alkali residue weight percentage of 0.83%, so compared with the undoped nickel-cobalt-aluminium ternary lithium ion cathode material in Comparative Example 1, the Al-doped nickel-cobalt-aluminium ternary lithium ion cathode material ($Li_{1.035}Ni_{0.815}Co_{0.15}Al_{0.035})_{0.9984}Al_{0.0016}O_2$ in Embodiment 11 has more stable cycle performance and its surface alkali residue is effectively reduced.

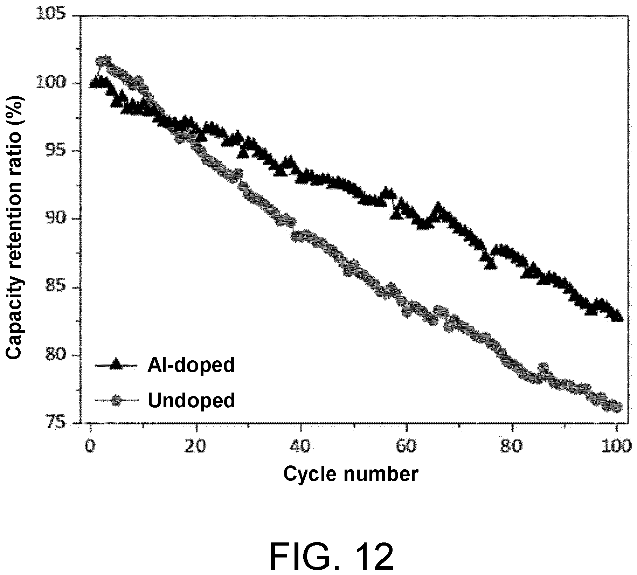

Referring to Fig. 12, it can be seen in combination with the data of Table 2 that the Al-doped nickel-cobalt-aluminium ternary lithium ion cathode material ($Li_{1.035}Ni_{0.815}Co_{0.15}Al_{0.035})_{0.997}Al_{0.003}O_2$ in Embodiment 4 has a capacity retention ratio of 82.8% after 100 cycles and a total alkali residue weight percentage of 0.69%, while the undoped nickel-cobalt-aluminium ternary lithium ion cathode material in Comparative Example 2 has a capacity retention ratio of 76.2% after 100 cycles and a surface alkali residue weight percentage of 0.88%, so compared with the undoped nickel-cobalt-aluminium ternary lithium ion cathode material in Comparative Example 2, the Al-doped nickel-cobalt-aluminium ternary lithium ion cathode material ($Li_{1.035}Ni_{0.815}Co_{0.15}Al_{0.035})_{0.997}Al_{0.003}O_2$ in Embodiment 12 has more stable cycle performance and its surface alkali residue is effectively reduced.

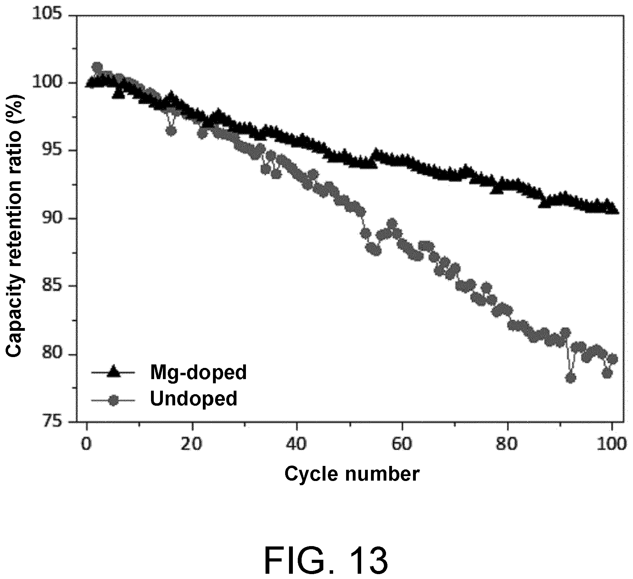

Referring to Fig. 13, it can be seen in combination with the data of Table 2 that the Mg-doped nickel-cobalt-aluminium ternary lithium ion cathode material ($Li_{1.035}Ni_{0.815}Co_{0.15}Al_{0.035})_{0.9983}Mg_{0.0017}O_2$ in Embodiment 5 has a capacity retention ratio of 90.7% after 100 cycles and a total alkali residue weight percentage of 0.56%, while the undoped nickel-cobalt-aluminium ternary lithium ion cathode material in Comparative Example 1 has a capacity retention ratio of 79.7% after 100 cycles and a surface alkali residue weight percentage of 0.83%, so compared with the undoped nickel-cobalt-aluminium ternary lithium ion cathode material in Comparative Example 1, the Mg-doped nickel-cobalt-aluminium ternary lithium ion cathode material ($Li_{1.035}Ni_{0.815}Co_{0.15}Al_{0.035})_{0.9983}Mg_{0.0017}O_2$ in Embodiment 13 has more stable cycle performance and its surface alkali residue is effectively reduced.

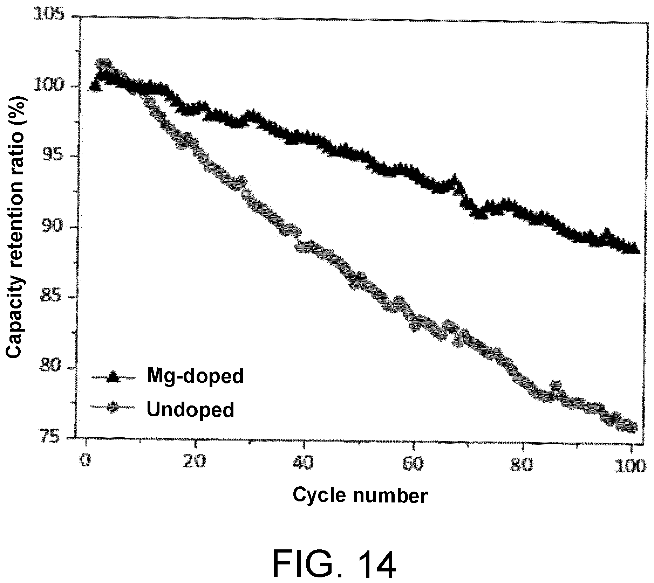

Referring to Fig. 14, it can be seen in combination with the data of Table 2 that the Mg-doped nickel-cobalt-aluminium ternary lithium ion cathode material ($Li_{1.035}Ni_{0.815}Co_{0.15}Al_{0.035})_{0.9975}Mg_{0.0025}O_2$ in Embodiment 6 has a capacity retention ratio of 88.9% after 100 cycles and a total alkali residue weight percentage of 0.59%, while the undoped nickel-cobalt-aluminium ternary lithium ion cathode material in Comparative Example 2 has a capacity retention ratio of 76.2% after 100 cycles and a surface alkali residue weight percentage of 0.88%, so compared with the undoped nickel-cobalt-aluminium ternary lithium ion cathode material in Comparative Example 2, the Mg-doped nickel-cobalt-aluminium ternary lithium ion cathode material ($Li_{1.035}Ni_{0.815}Co_{0.15}Al_{0.035})_{0.9975}Mg_{0.0025}O_2$ in Embodiment 14 has more stable cycle performance and its surface alkali residue is effectively reduced.

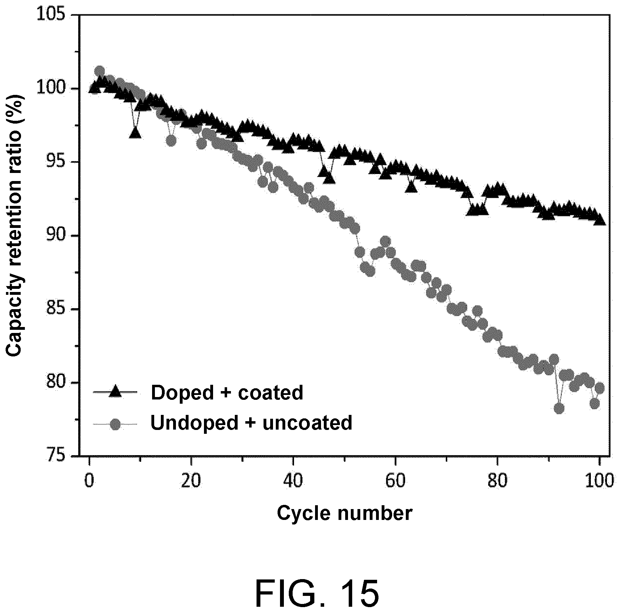

Referring to Fig. 15, it can be seen in combination with the data of Table 2 that the Ti-doped and $ZrO_2$-coated nickel-cobalt-aluminium ternary lithium ion battery cathode material ($Li_{1.035}Ni_{0.815}Co_{0.15}Al_{0.035})_{0.9982}Ti_{0.0007}Zr_{0.0011}O_2$ in Embodiment 15 has a capacity retention ratio of 91% after 100 cycles, while the undoped and uncoated nickel-cobalt-aluminium ternary lithium ion battery cathode material in Comparative Example 1 has a capacity retention ratio of 79.7% after 100 cycles, so compared with the undoped and uncoated nickel-cobalt-aluminium ternary lithium ion battery cathode material in Comparative Example 1, the Ti-doped and $ZrO_2$-coated nickel-cobalt-aluminium ternary lithium ion battery cathode material ($Li_{1.035}Ni_{0.815}Co_{0.15}Al_{0.035})_{0.9982}Ti_{0.0007}Zr_{0.0011}O_2$ in Embodiment 15 has more stable cycle performance.

Referring to the data in Table 2, it can be seen that the final product of the nickel-cobalt-aluminium ternary lithium ion battery cathode material flushed with carbon dioxide gas stream in step (3) of Embodiment 16 has a surface alkali residue of 0.33%, while the unwashed nickel-cobalt-aluminium ternary lithium ion battery cathode material in Comparative Example 1 has a surface alkali residue of 0.83%, so compared with the unwashed nickel-cobalt-aluminium ternary lithium ion battery cathode material in Comparative Example 1, the surface alkali residue of the nickel-cobalt-aluminium ternary lithium ion battery cathode material flushed with carbon dioxide gas stream in Embodiment 16 is effectively reduced.

The final product of the nickel-cobalt-aluminium ternary lithium ion battery cathode material washed with carbonated water in step (3) of Embodiment 17 has a surface alkali residue of 0.21%, while the unwashed nickel-cobalt-aluminium ternary lithium ion battery cathode material in Comparative Example 2 has a surface alkali residue of 0.88%, so compared with the unwashed nickel-cobalt-aluminium ternary lithium ion battery cathode material in Comparative Example 2, the surface alkali residue of the nickel-cobalt-aluminium ternary lithium ion battery cathode material washed with carbonated water in Embodiment 17 is effectively reduced.

Based on the above, the nickel-cobalt-aluminium ternary cathode material of the present application has at least the following advantages: the charge and discharge cycle performance of the nickel-cobalt-aluminium ternary cathode material prepared by the method of the present disclosure at 3.0-4.3 V is remarkably improved; comparing Embodiments 1 to 15 and Comparative Examples 1 and 2, it can be found that the capacity retention ratio of the nickel-cobalt-aluminium ternary cathode material prepared by the method of the present disclosure is higher than that of the undoped and uncoated nickel-cobalt-aluminium ternary cathode material after 100 cycles; this shows that the nickel-cobalt-aluminium ternary cathode material of the present application has more stable cycle performance.

Various modifications and variations may be made to the present disclosure by a person skilled in the art without departing from the spirit and scope of the present disclosure. If these modifications and variations of the present disclosure fall within the scope of the claims of the present disclosure and equivalent technologies thereof, the present disclosure is intended to include these modifications and variations.

**Claims**

1. A coated nickel-cobalt-aluminium ternary lithium ion battery cathode material, which is **characterized in**, comprising a lithium nickel cobalt aluminate material and a coating material which coats a surface of the lithium nickel cobalt aluminate material, wherein a chemical formula of the coated nickel-cobalt-aluminium ternary lithium ion battery cathode material is shown in formula (I):

$$(Li_aN1_{1-x-y}Co_xAl_y)_{1-b}M_bO_2 \qquad (I)$$

   a, b, x, and y are mole fractions, $x>0$, $y>0$, $1-x-y>0$, $1 \leq a \leq 1.1$, and $0 < b \leq 0.02$, wherein M is selected from one or more of an alkali metal element, an alkaline earth metal element, an element from group XIII, an element from group XIV, a transition metal element, and a rare earth element.

2. The coated nickel-cobalt-aluminium ternary lithium ion battery cathode material according to claim 1, wherein $0.03 \leq x \leq 0.15$, $0.01 \leq y \leq 0.05$, $1 \leq a \leq 1.05$, and $0 < b \leq 0.01$.

3. The coated nickel-cobalt-aluminium ternary lithium ion battery cathode material according to claim 1, wherein M is Zr, x=0.15, y=0.035, a=1.035, and b=0.0016; or M is Zr, x=0.15, y=0.035, a=1.035, and b=0.0008; or M is Al, x=0.15, y=0.035, a=1.035, and b=0.002; or M is Al, x=0.15, y=0.035, a=1.035, and b=0.0055; or M is Zn, x=0.15, y=0.035, a=1.035, and b=0.0029; or M is Zn, x=0.15, y=0.035, a=1.035, and b=0.0007; or M is Mg, x=0.15, y=0.035, a=1.035, and b=0.0078; or M is Mg, x=0.15, y=0.035, a=1.035, and b=0.0078; or M is Mg, x=0.15, y=0.035, a=1.035, and b=0.0017.

4. The coated nickel-cobalt-aluminium ternary lithium ion battery cathode material according to claim 1, wherein a coating method is one of a dry method, an aqueous phase wet method, and an organic phase wet method.

5. A doped nickel-cobalt-aluminium ternary lithium ion cathode material, which is **characterized in that**, a chemical formula of the doped nickel-cobalt-aluminium ternary lithium ion cathode material is shown in formula (I):

$$(Li_aNi_{1-x-y}Co_xAl_y)_{1-b}M'_bO_2 \qquad (I);$$

   wherein a, b, x, and y are mole fractions, $x>0$, $y>0$, $1-x-y>0$, $1 \leq a \leq 1.1$, and $0 < b \leq 0.01$, wherein

M' is selected from one or more of an alkali metal element, an alkaline earth metal element, an element from group XIII, an element from group XIV, a transition metal element, and a rare earth element.

6. The doped nickel-cobalt-aluminium ternary lithium ion cathode material according to claim 5, wherein $0.03 \leq x \leq 0.15$, $0.01 \leq y \leq 0.05$, $1 \leq a \leq 1.05$, and $0 < b < 0.005$.

7. The doped nickel-cobalt-aluminium ternary lithium ion cathode material according to claim 5, wherein M' is Ti, x=0.15, y=0.035, a=1.035, and b=0.0007; or M' is Ti, x=0.15, y=0.035, a=1.035, and b=0.0019; or M' is Al, x=0.15, y=0.035, a=1.035, and b=0.016; or M' is Al, x=0.15, y=0.035, a=1.035, and b=0.003; or M' is Mg, x=0.15, y=0.035, a=1.035, and b=0.0017; or M' is Mg, x=0.15, y=0.035, a=1.035, and b=0.0025.

8. A doped and coated nickel-cobalt-aluminium ternary lithium ion battery cathode material, which is **characterized in that**, a chemical formula of the doped and coated nickel-cobalt-aluminium ternary lithium ion battery cathode material is shown in formula (I):

$$(Li_aNi_{1-x-y}Co_xAl_y)_{1-b}\ M'_{b1}M_{b2}O_2 \qquad (I)$$

a, b, x, and y are mole fractions, x>0, y>0, 1-x-y>0, $1 \leq a \leq 1.1$, b= b1+b2, and $0 < b \leq 0.01$, wherein M' and M are selected from one or more of an alkali metal element, an alkaline earth metal element, an element from group XIII, an element from group XIV, a transition metal element, and a rare earth element.

9. The doped and coated nickel-cobalt-aluminium ternary lithium ion battery cathode material according to claim 8, wherein
$0.03 \leq x \leq 0.15$, $0.01 \leq y \leq 0.05$, $1 \leq a \leq 1.05$, and $0 < b \leq 0.01$.

10. The doped and coated nickel-cobalt-aluminium ternary lithium ion battery cathode material according to claim 8, wherein M' is Ti, M is Zr, x=0.15, y=0.035, a=1.035, b1= 0.0007, and b2=0.0011.

11. The doped and coated nickel-cobalt-aluminium ternary lithium ion battery cathode material according to claim 8, wherein a coating method is one of a dry method, an aqueous phase wet method, and an organic phase wet method.

12. A preparation method of the coated nickel-cobalt-aluminium ternary lithium ion battery cathode material according to any one of claims 1 to 4, which is **characterized in that**, comprising the following steps of:

   step (1), first sintering: sintering a ternary cathode material precursor $Ni_{1-x-y}Co_xAl_y(OH)_{2+y}$;
   step (2), second sintering: adding a lithium source to a product obtained by sintering in step (1) for mixing and grinding, sintering after uniform grinding, and then cooling to room temperature after complete sintering; and
   step (3), third sintering: adding a coating material to a product obtained by sintering in step (2) for sintering to obtain the coated nickel-cobalt-aluminium ternary lithium ion battery cathode material $(Li_aNi_{1-x-y}Co_xAl_y)_{1-b}M_bO_2$, $0.03 \leq x \leq 0.15$, $0.01 \leq y \leq 0.05$, $1 \leq a \leq 1.1$, and $0 < b \leq 0.02$.

13. A preparation method of the doped nickel-cobalt-aluminium ternary lithium ion cathode material according to any one of claims 5 to 7, which is **characterized in that**, comprising the following steps:

   step (1), first sintering: sintering a ternary cathode material precursor $Ni_{1-x-y}Co_xAl_y(OH)_{2+y}$;
   step (2), second sintering: adding a lithium source to a product obtained by sintering in step (1) for grinding, sintering after uniform grinding, and then cooling to room temperature after complete sintering,
   wherein a doping material metal M' compound is added in step (1), or mixed and ground with the lithium source in step (2), or added in step (1) and step (2) respectively; and
   step (3), third sintering: sintering a product obtained by sintering in step (2) to obtain the doped nickel-cobalt-aluminium ternary lithium ion battery cathode material $(Li_aNi_{1-x-y}Co_xAl_y)_{1-b}M'_bO_2$, $0.03 \leq x \leq 0.15$, $0.01 \leq y \leq 0.05$, $1 \leq a \leq 1.1$, and $0 < b \leq 0.01$.

14. A preparation method of the doped and coated nickel-cobalt-aluminium ternary lithium ion battery cathode material according to any one of claims 8 to 11, which is **characterized in that**, comprising the following steps:

   step (1), first sintering: sintering a ternary cathode material precursor $Ni_{1-x-y}Co_xAl_y(OH)_{2+y}$;
   step (2), second sintering: adding a lithium source to a product obtained by sintering in step (1) for grinding, sintering after uniform grinding, and then cooling to room temperature after complete sintering,
wherein a doping material metal M' compound is added in step (1), or mixed and ground with the lithium source in step (2), or added in step (1) and step (2) respectively; and

step (3), third sintering: adding a coating material metal M compound to a product obtained by sintering in step (2) for sintering to obtain the doped and coated nickel-cobalt-aluminium ternary lithium ion battery cathode material $(Li_aNi_{1-x-y}Co_xAl_y)_{1-b}$ $M'_{b1}M_{b2}O_2$, wherein a, b, x, and y are mole fractions, $x>0$, $y>0$, $1-x-y>0$, $1 \le a \le 1.1$, $b= b1+b2$, and $0 < b \le 0.01$.

15. The preparation method according to any one of claims 12 to 14, further comprising the following step: step (4): washing a product obtained by sintering in step (3); and sintering the washed product of step (3) to obtain a target product.

16. A preparation method of a nickel-cobalt-aluminium ternary lithium ion battery cathode material, which is **characterized in that**, comprising the following steps:

step (1), first sintering: sintering a ternary cathode material precursor $Ni_{1-x-y}Co_xAl_y(OH)_{2+y}$;

step (2), second sintering: adding a lithium source to a product obtained by sintering in step (1) for mixing and grinding, sintering in air or oxygen after uniform grinding, and then cooling to room temperature;

step (3), third sintering: sintering a product obtained by sintering in step (2), and then washing the sintered product; and

step (4), fourth sintering: sintering a product washed in step (3) to obtain a target product.

17. The preparation method according to any one of claims 12 to 16, wherein in step (1), a sintering time is 6 to 20 hours, and a sintering temperature is 200 to 1000 °C.

18. The preparation method according to any one of claims 12 to 16, wherein in step (2), the lithium source is one of lithium hydroxide, lithium acetate, lithium oxalate, lithium carbonate, lithium nitrate, lithium chloride and lithium fluoride.

19. The preparation method according to any one of claims 12 to 16, wherein in step (2), the lithium source is lithium hydroxide monohydrate, and the lithium hydroxide monohydrate is dried to completely lose crystal water and then mixed with the product obtained by sintering in step (1).

20. The preparation method according to any one of claims 12 to 16, wherein in step (2), a sintering time is 8 to 24 hours, and a sintering temperature is 500 to 1000 °C.

21. The preparation method according to any one of claims 12 to 16, wherein in step (2), a cooling rate is 0.01 to 2.5 °C/min.

22. The preparation method according to any one of claims 12 to 16, wherein in step (2), a cooling rate is 0.02 to 1 °C/min.

23. The preparation method according to any one of claims 12 to 16, wherein in step (2), the lithium source is added in a molar ratio of Li to (Ni+Co+Al) in the ternary cathode material precursor of 1 : 1 to 1.1 : 1.

24. The preparation method according to any one of claims 12 to 16, wherein the sintering in step (2) is carried out in air or oxygen.

25. The preparation method according to claim 12 or claim 14, wherein the coating material in step (3) is selected from one or more of of an oxide of metal M, a fluoride of metal M, a sulfide of metal M, a telluride of metal M, a selenide of metal M, an antimonide of metal M, a phosphide of metal M and a composite oxide of metal M.

26. The preparation method according to claim 13 or claim 14, wherein the doping material in step (2) is selected from one or more of an oxide of metal M', a fluoride of metal M', a sulfide of metal M', a telluride of metal M', a selenide of metal M', an antimonide of metal M', a phosphide of metal M' and a composite oxide of metal M'.

27. The preparation method according to any one of claims 12 to 16, wherein in step (3), a sintering time is 1 to 12 hours, and a sintering temperature is 500 to 1000 °C.

28. The preparation method according to claim 15 or claim 16, wherein the washing method in step (3) is flushing with carbon dioxide gas stream or washing with carbonated water.

**29.** The preparation method according to claim 15 or claim 16, wherein in step (4), a sintering time is 0.5 to 12 hours, and a sintering temperature is 100 to 1000 °C.

**30.** A lithium ion battery, comprising a cathode, an anode, an electrolyte solution and a separator, which is **characterized in that**, the cathode comprises the nickel-cobalt-aluminium ternary lithium ion battery cathode material according to any one of claims 1 to 11 or the nickel-cobalt-aluminium ternary lithium ion battery cathode material prepared by the method according to any one of claims 12 to 29.

**31.** Application of the nickel-cobalt-aluminium ternary lithium ion battery cathode material according to any one of claims 1 to 11 or the nickel-cobalt-aluminium ternary lithium ion battery cathode material prepared by the method according to any one of claims 12 to 29 in preparation of lithium ion batteries, electronic product accumulators, industrial accumulators, and power supplies of electric vehicles and electric bicycles.

FIG. 1

**FIG. 2**

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

## INTERNATIONAL SEARCH REPORT

| International application No. |
| --- |
| **PCT/CN2019/070656** |

### A. CLASSIFICATION OF SUBJECT MATTER

H01M 4/36(2006.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: ni, co, al, 镍, 钴, 铝, aluminate, cobalt, nickel, sinter+, 前驱体, 煅烧, 焙烧

### C. DOCUMENTS CONSIDERED TO BE RELEVANT

| Category* | Citation of document, with indication, where appropriate, of the relevant passages | Relevant to claim No. |
| --- | --- | --- |
| PX | CN 108461737 A (SUZHOU LIONANO NEW ENERGY CO., LTD. ET AL.) 28 August 2018 (2018-08-28) description, paragraphs 0004-0037 and 0047-0058 | 1-31 |
| PX | CN 108428871 A (SUZHOU LIONANO NEW ENERGY CO., LTD. ET AL.) 21 August 2018 (2018-08-21) description, paragraphs 0005-0033 | 1-31 |
| PX | CN 108461750 A (SUZHOU LIONANO NEW ENERGY CO., LTD. ET AL.) 28 August 2018 (2018-08-28) description, paragraphs 0006-0037 | 1-31 |
| PX | CN 108461736 A (SUZHOU LIONANO NEW ENERGY CO., LTD. ET AL.) 28 August 2018 (2018-08-28) description, paragraphs 0006-0035 | 1-31 |
| PX | CN 108428873 A (SUZHOU LIONANO NEW ENERGY CO., LTD. ET AL.) 21 August 2018 (2018-08-21) description, paragraphs 0003-0023 | 1-31 |
| PX | CN 108321381 A (SUZHOU LIONANO NEW ENERGY CO., LTD. ET AL.) 24 July 2018 (2018-07-24) description, paragraphs 0005-0029 | 1-31 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 March 2019** | **04 April 2019** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2019/070656**

### C.    DOCUMENTS CONSIDERED TO BE RELEVANT

| Category* | Citation of document, with indication, where appropriate, of the relevant passages | Relevant to claim No. |
|---|---|---|
| PX | CN 108493415 A (SUZHOU LIONANO NEW ENERGY CO., LTD. ET AL.) 04 September 2018 (2018-09-04)<br>      description, paragraphs 0003-0023 | 1-31 |
| PX | CN 108417807 A (SUZHOU LIONANO NEW ENERGY CO., LTD. ET AL.) 17 August 2018 (2018-08-17)<br>      description, paragraphs 0005-0029 | 1-31 |
| PX | CN 108470894 A (SUZHOU LIONANO NEW ENERGY CO., LTD. ET AL.) 31 August 2018 (2018-08-31)<br>      description, paragraphs 0003-0022 | 1-31 |
| PX | CN 108461738 A (SUZHOU LIONANO NEW ENERGY CO., LTD. ET AL.) 28 August 2018 (2018-08-28)<br>      description, paragraphs 0005-0029 | 1-31 |
| PX | CN 108493416 A (SUZHOU LIONANO NEW ENERGY CO., LTD. ET AL.) 04 September 2018 (2018-09-04)<br>      description, paragraphs 0003-0023 | 1-31 |
| X | CN 103633308 A (NINGBO JINHE NEW MATERIALS CO., LTD.) 12 March 2014 (2014-03-12)<br>      description, paragraphs 0019-0025 | 1-31 |
| X | CN 103825016 A (NINGBO JINHE NEW MATERIALS CO., LTD.) 28 May 2014 (2014-05-28)<br>      description, paragraphs 0004-0020 | 1-31 |
| X | CN 103972499 A (HAINING MEIDARUI NEW MATERIALS TECHNOLOGY CO., LTD.) 06 August 2014 (2014-08-06)<br>      description, paragraphs 0005-0019 | 1-31 |

Form PCT/ISA/210 (second sheet) (January 2015)

INTERNATIONAL SEARCH REPORT
Information on patent family members

International application No.

**PCT/CN2019/070656**

| Patent document cited in search report | | | Publication date (day/month/year) | Patent family member(s) | | | Publication date (day/month/year) |
|---|---|---|---|---|---|---|---|
| CN | 108461737 | A | 28 August 2018 | None | | | |
| CN | 108428871 | A | 21 August 2018 | None | | | |
| CN | 108461750 | A | 28 August 2018 | None | | | |
| CN | 108461736 | A | 28 August 2018 | None | | | |
| CN | 108428873 | A | 21 August 2018 | None | | | |
| CN | 108321381 | A | 24 July 2018 | None | | | |
| CN | 108493415 | A | 04 September 2018 | None | | | |
| CN | 108417807 | A | 17 August 2018 | None | | | |
| CN | 108470894 | A | 31 August 2018 | None | | | |
| CN | 108461738 | A | 28 August 2018 | None | | | |
| CN | 108493416 | A | 04 September 2018 | None | | | |
| CN | 103633308 | A | 12 March 2014 | None | | | |
| CN | 103825016 | A | 28 May 2014 | CN | 103825016 | B | 07 September 2016 |
| CN | 103972499 | A | 06 August 2014 | CN | 103972499 | B | 10 April 2018 |

Form PCT/ISA/210 (patent family annex) (January 2015)